(19) **Europäisches Patentamt European Patent Office Office européen des brevets**

(11) **EP 4 629 299 A1**

(12) **EUROPEAN PATENT APPLICATION**
published in accordance with Art. 153(4) EPC

(43) Date of publication:
08.10.2025 Bulletin 2025/41

(21) Application number: 24839989.1

(22) Date of filing: 04.07.2024

(51) International Patent Classification (IPC):
$H01M\ 4/04^{(2006.01)}$    $B65H\ 43/04^{(2006.01)}$
$G06Q\ 50/04^{(2012.01)}$    $G06Q\ 50/10^{(2012.01)}$
$H01M\ 10/04^{(2006.01)}$

(52) Cooperative Patent Classification (CPC):
Y02E 60/10

(86) International application number:
PCT/KR2024/009436

(87) International publication number:
WO 2025/014176 (16.01.2025 Gazette 2025/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 07.07.2023 KR 20230088294
20.06.2024 KR 20240080253

(71) Applicant: LG Energy Solution, Ltd.
Seoul 07335 (KR)

(72) Inventors:
• PARK, Jae Wan
Daejeon 34122 (KR)
• KIM, June Hee
Daejeon 34122 (KR)
• SIM, Min Kyu
Daejeon 34122 (KR)
• BAE, In Bong
Daejeon 34122 (KR)
• KIM, Min Su
Daejeon 34122 (KR)
• PARK, Jong Seok
Daejeon 34122 (KR)

(74) Representative: BCKIP Part mbB
MK1
Landsbergerstraße 98, 3.Stock
80339 München (DE)

(54) **METHOD FOR GENERATING ROLL MAP**

(57) According to exemplary embodiments, a method for generating a roll map is provided. The method comprises the steps of: unwinding an electrode sheet from a first electrode roll and winding the electrode sheet into a second electrode roll; collecting unwinding direction data of the first electrode roll; and generating a second roll map of the second electrode roll on the basis of a first roll map of the first electrode roll and the unwinding direction data of the first electrode roll.

**EP 4 629 299 A1**

[FIG. 4]

```
┌─────────────────────────────────────────────────────┐
│   UNWOUND ELECTRODE SHEET FROM FIRST ELECTRODE ROLL  │
│   AND WIND ELECTRODE SHEET INTO SECOND ELECTRODE ROLL│──P110
└─────────────────────────────────────────────────────┘
                          │
                          ▼
┌─────────────────────────────────────────────────────┐
│  COLLECT DATA OF FIRST ELECTRODE ROLL IN UNWINDING DIRECTION │
│    AND DATA OF SECOND ELECTRODE ROLL IN WINDING DIRECTION    │──P120
└─────────────────────────────────────────────────────┘
                          │
                          ▼
┌─────────────────────────────────────────────────────┐
│  TRANSMIT DATA OF FIRST ELECTRODE ROLL IN UNWINDING DIRECTION │
│   AND DATA OF SECOND ELECTRODE IN WINDING DIRECTION TO SEVER  │──P130
└─────────────────────────────────────────────────────┘
                          │
                          ▼
┌─────────────────────────────────────────────────────┐
│   GENERATE SECOND ROLL MAP OF SECOND ELECTRODE BASED │
│   ON FIRST ROLL MAP OF FIRST ELECTRODE ROLL AND DATA │──P140
│      OF FIRST ELECTRODE ROLL IN UNWINDING DIRECTION  │
└─────────────────────────────────────────────────────┘
```

[FIG. 5]

```
┌─────────────────────────────────────────────────────┐
│  COMBINE FIRST INPUT ELECTRODE ROLL WITH SECOND INPUT│
│  ELECTRODE ROLL IR2 TO PROVIDE OUTPUT ELECTRODE ROLL │──P210
└─────────────────────────────────────────────────────┘
                          │
                          ▼
┌─────────────────────────────────────────────────────┐
│  COLLECT COMBINATION DATA OF OUTPUT ELECTRODE ROLL   │──P220
└─────────────────────────────────────────────────────┘
                          │
                          ▼
┌─────────────────────────────────────────────────────┐
│              TRANSMIT COMBINATION DATA               │──P230
└─────────────────────────────────────────────────────┘
                          │
                          ▼
┌─────────────────────────────────────────────────────┐
│     GENERATE OUTPUT ROLL MAP OF OUTPUT ELECTRODE ROLL│──P240
└─────────────────────────────────────────────────────┘
```

# Description

[Technical Field]

The present invention relates to a roll map generating method. The present application claims the benefit of priority based on Korean Patent Application No. 10-2023-0088294, filed on July 7, 2023 and Korean Patent Application No. 10-2024-0080253, filed on June 20, 2024, and the entire contents of the Korean patent applications are incorporated herein by reference.

[Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

[Disclosure]

[Technical Problem]

The present invention is directed to providing a rewinding stage with improved reliability and traceability and a method of generating a roll map of the rewinding stage.

[Technical Solution]

Example embodiments of the present invention provide a roll map generating method. The roll map generating method includes unwinding an electrode sheet from a first electrode roll and winding the electrode sheet into a second electrode roll, collecting data of the first electrode roll in an unwinding direction, and generating a second roll map of the second electrode roll based on a first roll map of the first electrode roll and the data of the first electrode roll in the unwinding direction.

The second roll map may be generated by inversion of coordinate values of coordinate data of the first roll map.

A start coordinate of the first roll map may be calibrated to an end coordinate of the second roll map and an end coordinate of the first roll map may be calibrated to a start coordinate of the second roll map by the inversion of the coordinate values of the coordinate data.

The first roll map may include winding direction data of the first electrode roll.

The electrode sheet may include an upper surface and a lower surface opposite to the upper surface.

The first roll map may include a part corresponding to the upper surface of the electrode sheet and a part corresponding to the lower surface of the electrode sheet, and the second roll map may include a part corresponding to the upper surface of the electrode sheet and a part corresponding to the lower surface of the electrode sheet.

The unwinding direction of the first electrode roll may be the same as a winding direction of the first electrode roll, the part of the second roll map corresponding to the lower surface of the electrode sheet may be generated based on the part of the first roll map corresponding to the lower surface of the electrode sheet, and the part of the second roll map corresponding to the upper surface of the electrode sheet may be generated based on the part of the first roll map corresponding to the upper surface of the electrode sheet.

The unwinding direction of the first electrode roll may be opposite to a winding direction of the first electrode roll, the part of the second roll map corresponding to the lower surface of the electrode sheet may be generated based on the part of the first roll map corresponding to the upper surface of the electrode sheet, and the part of the second roll map corresponding to the upper surface of the electrode sheet may be generated based on the part of the first roll map corresponding to the lower surface of the electrode sheet.

Example embodiments provide a roll map generating method. The roll map generating method includes combining a first input electrode roll with a second input electrode roll to provide an output electrode roll, collecting combination data of the output electrode roll, and generating an output roll map of the output electrode roll based on the combination data, a first input roll map of the first input electrode roll, and a second input roll map of the second input electrode roll.

The generating of the output roll map my include generating a first inverted roll map by inverting coordinate values of coordinate data of the first input roll map and generating a second inverted roll map by inverting coordinate values of coordinate data of the second input roll map.

The first inverted roll map may be incorporated into the output roll map.

Coordinate data of the second inverted roll map may be calibrated based on an end coordinate of the first inverted roll map.

Example embodiments provide a roll map generating method. The roll map generating method includes unwinding an electrode sheet from a first electrode roll, scrapping a defective part of the electrode sheet, winding the electrode sheet into a second electrode roll, collecting scrap data indicating the scrapped part of the electrode sheet, and generating a second roll map of the second electrode roll based on a first roll map of the first electrode roll and the scrap data.

The scrap data may include a start coordinate and a length of the scrapped part of the electrode sheet.

The generating the second roll map may include inverting coordinate values of coordinate data of the first roll map.

Coordinate data of the second roll map may be calibrated based on the start coordinate and length of the scrapped part of the electrode sheet.

Example embodiments provide a roll map generating method. The roll map generating method includes unwinding an electrode sheet from a first electrode roll completed in a first roll-to-roll process, wherein the electrode sheet includes first and second lanes arranged in a transverse direction, performing a second roll-to-roll process on the electrode sheet, winding the electrode sheet into a second electrode roll, generating a second roll map of the second electrode roll, wherein the second roll map includes second data collected from the electrode sheet in the second roll-to-roll process and a second coordinate matching the second data and indicating a position on the electrode sheet, and matching the first roll map to the second roll map based on a winding direction and an unwinding direction of the first electrode roll in the first roll-to-roll process, in which the first roll map includes first data of the electrode sheet collected in the first roll-to-roll process and a first coordinate matching the first data and indicating a position on the electrode sheet.

The first roll-to-roll process may be a roll pressing process or a slitting process.

The second roll-to-roll process may include scrapping of a defective part of the electrode sheet.

The first data of the first roll map collected from an upper surface of the electrode sheet may be matched to the second data of the second roll map collected from the upper surface of the electrode sheet, and the first data of the first roll map collected from a lower surface of the electrode sheet may be matched to the second data of the second roll map collected from the lower surface of the electrode sheet.

The electrode sheet may be wound into the first electrode roll through over winding in the first roll-to-roll process, and unwound from the first electrode roll through over unwinding in the second roll-to-roll process.

The electrode sheet may be wound into the first electrode roll through under winding in the first roll-to-roll process and unwound from the first electrode roll through under unwinding in the second roll-to-roll process.

The first data of the first roll map collected from the first lane of the electrode sheet may be matched to the second data of the second roll map collected from the second lane of the electrode sheet, and the first data of the first roll map collected from the second lane of the electrode sheet may be matched to the second data of the second roll map collected from the first lane of the electrode sheet.

The first data of the first roll map collected from an upper surface of the electrode sheet may be matched to the second data of the second roll map collected from a lower surface of the electrode sheet, and the first data of the first roll map collected from the lower surface of the electrode sheet may be matched to the second data of the second roll map collected from the upper surface of the electrode sheet.

The electrode sheet may be wound into the first electrode roll through over winding in the first roll-to-roll process and unwound from the first electrode roll through under unwinding in the second roll-to-roll process.

The electrode sheet may be wound into the first electrode roll through under winding in the first roll-to-roll process and unwound from the first electrode roll through over unwinding in the second roll-to-roll process.

The first data of the first roll map collected from the first lane of the electrode sheet may be matched to the second data of the second roll map collected from the first lane of the electrode sheet, and the first data of the first roll map collected from the second lane of the electrode sheet may be matched to the second data of the second roll map collected from the second lane of the electrode sheet.

[Advantageous Effects]

Example embodiments of the present invention provide a method of generating a roll map using a rewinding stage.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

[Brief Description of the Drawings]

FIG. 1 illustrates a secondary battery manufacturing system according to example embodiments.

FIG. 2 illustrates a secondary battery manufacturing system according to example embodiments.

FIG. 3 illustrates a secondary battery manufacturing system according to example embodiments.

FIG. 4 is a flowchart of a roll map generating method according to example embodiments.

FIG.5 is a flowchart of a roll map generating method according to example embodiments.

FIG. 6 is a diagram for describing a roll map generating method according to example embodiments.

FIG. 7 is a flowchart of a roll map generating method according to example embodiments.

FIG. 8 is a diagram for describing a roll map generating method according to example embodiments.

FIG. 9 illustrates winding of an electrode sheet including first to fourth lanes.

FIG. 10 illustrates aspects in which a first electrode roll is unwound in a first roll-to-roll process.

FIG. 11 illustrates aspects in which a second electrode roll is unwound in a second roll-to-roll process.

FIGS. 12 to 15 are diagrams illustrating matching roll maps according to an aspect of winding and an aspect of unwinding.

[Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

(First Embodiment)

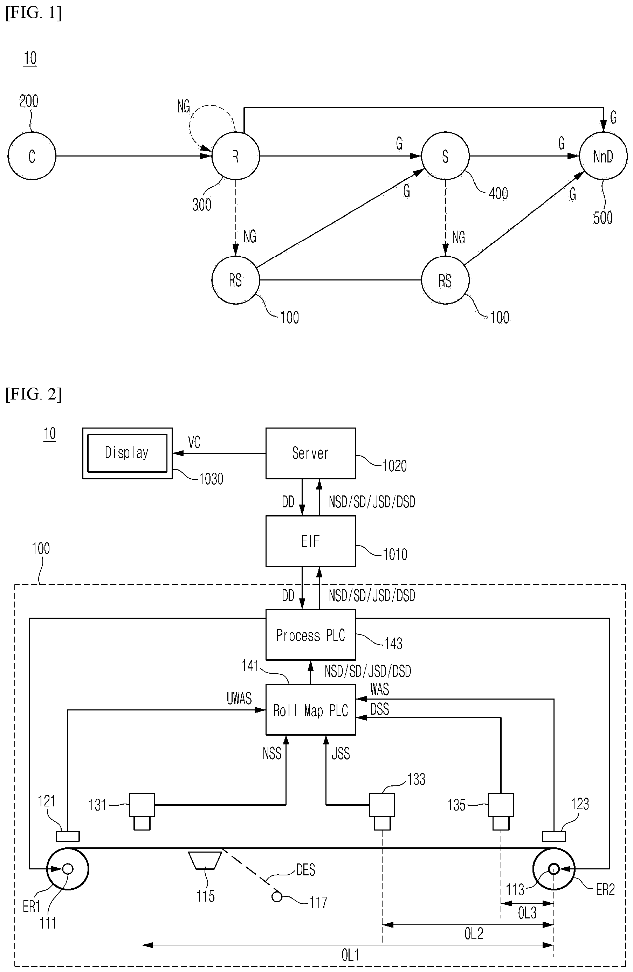

FIG. 1 illustrates a secondary battery manufacturing system 10 according to example embodiments.

Referring to FIG. 1, the secondary battery manufacturing system 10 may include rewinding stages 100, a coating device 200, a roll pressing device 300, a slitting device 400, and a notching device 500.

An electrode sheet unwound from an input electrode roll may be processed by a die coater of the coating device 200, pressing rolls of the roll pressing device 300, or a slitting knife of the slitting device 400, and the processed electrode sheet may be wound into an electrode roll. Accordingly, each of operations performed by the coating device 200, the roll pressing device 300, and the slitting device 400 to produce electrodes of a secondary battery may be referred to as a roll-to-roll process.

The coating device 200 may perform the coating process on the electrode sheet. The coating process is a process of applying a coating material such as an electrode slurry to the electrode sheet. The electrode slurry may include an electrode active material, a conductive agent, a binder, and a solvent. The electrode slurry may be provided by dissolving the electrode active material, the conductive additive, the binder, etc. in the solvent.

The roll pressing device 300 may perform the roll pressing process on the electrode sheet. The roll pressing process is a process of passing the electrode sheet coated with the electrode slurry between pressing rolls facing each other. Through the roll pressing process, a surface of the electrode sheet may be planarized, and a binding force between the active material of the electrode sheet and a current collector may be improved.

The slitting device 400 may perform the slitting process on the electrode sheet. The electrode sheet may be divided into a plurality of electrode sheets by the slitting process.

The notching device 500 may cut the electrode sheet unwound from the electrode roll into a shape of an electrode of a battery cell. Accordingly, unit electrodes may be formed by the notching device 500. The notching device 500 may further perform a drying process on one of the electrode sheet and the unit electrodes.

When the electrode sheet includes a defect, the defect of the electrode sheet may be removed. The defect of the electrode sheet may be removed by one of the roll pressing device 300 and the rewinding stages 100.

At each of the rewinding stages 100, a substantial process may not be performed on the electrode sheet. Each of the rewinding stages 100 may change a winding direction of the electrode sheet. Each of the rewinding stages 100 may unwind the electrode sheet from an electrode roll, remove a defect of the electrode sheet unwound from the electrode roll, and rewind the electrode sheet from which the defect is removed. Accordingly, in addition to the removal of the defect of the electrode roll, an outer part of the input electrode roll may be wound to be an inner part of an electrode roll to be output. Similarly, the inner part of the input electrode roll may be wound to be an outer part of the electrode roll to be output.

The roll pressing device 300 may remove the defect of the electrode sheet while performing the roll pressing process or remove only the defect of the electrode sheet without performing the roll pressing process. An operation of the roll pressing device 300 that removes only a defective part of an electrode sheet without performing the roll pressing process is referred to as a rewinding mode. In the rewinding mode, each of the pressing rolls may be moved to a position spaced apart from the electrode sheet.

Unit electrodes may be provided as the electrode roll is sequentially processed by the coating device 200, the roll pressing device 300, the slitting device 400, and the notching device 500. Wide unit electrodes may be directly transferred to the notching device 500 without performing slitting by the slitting device 400 after the roll pressing process is performed by the roll pressing device 300.

When a defect of the electrode roll processed by the coating device 200 and put into the roll pressing device 300 is excessive, the defect of the electrode roll may be removed by the roll pressing device 300. The excessive defect of the electrode roll processed by the coating device 200 may include folding of a large amount of taps and a ring defect.

When the defect of the electrode roll processed by the roll pressing device 300 is excessive, the defect of the electrode roll may be removed from the roll pressing device 300 or the rewinding stage 100 that operates in the rewinding mode. Next, an electrode roll with a reduced defect (or no defect) may be input to the slitting device 400. The excessive defect of the electrode roll processed by the roll pressing device 300 may include winding deviation and the number of defective tags that exceeds an upper limit.

When a defect of the electrode roll processed by the slitting device 400 is excessive, the defect of the electrode roll may be removed by the rewinding stage 100. Next, an electrode roll with a reduced defect (or no defect) may be input to the notching device 500. The excessive defect of the electrode roll processed by the slitting device 400 may include the number of defective tags that exceeds an upper limit.

Here, each of the rewinding stages 100 may be enabled for online functionality. Each of the rewinding stages 100 may be configured to scrap a defect of the electrode roll and collect scrap data indicating a scrapped length. Accordingly, a length of an electrode scrapped by the rewinding stages 100 may be updated, and the traceability of a secondary battery manufacturing process may be improved.

FIG. 2 illustrates a secondary battery manufacturing system 10 according to example embodiments.

Referring to FIG. 2, the secondary battery manufacturing system 10 may include a rewinding stage 100, an equipment interface (EIF) 1010, a server 1020, and a display device 1030.

The rewinding stage 100 may include an unwinder 111, a rewinder 113, a splicing table 115, a scrap port 117, a first rotary encoder 121, a second rotary encoder 123, a datum point sensor 135, a first controller 141, a second controller 143, the EIF 1010, the server 1020, and the display device 1030.

The secondary battery manufacturing system 10 may be configured to generate a roll map including data about an electrode sheet ES. The roll map may represent the electrode sheet ES based on coordinates indicating a position on the electrode sheet ES. A secondary battery manufacturing process may be performed on the electrode sheet ES as described below. The roll map may include data that indicates events of processes performed on the electrode sheet ES and that is related to coordinates. Accordingly, the roll map enables feedback, feedforwarding, and tracking of the secondary battery manufacturing process as described below.

A first electrode roll ER1 on which a previous process is performed may be loaded on the unwinder 111. The unwinder 111 may be configured to unwind the electrode sheet ES from the first electrode roll ER1. The rewinder 113 may be configured to wind the electrode sheet ES into a second electrode roll ER2. The electrode sheet ES may be wound into the second electrode roll ER2 and be cut and separated after a certain winding length is reached. Accordingly, the electrode sheet ES may be moved between the unwinder 111 and the rewinder 113.

Roll maps may be generated in units of lots. A lot is a production unit of the roll-to-roll process, and the separated second electrode roll ER2 is an example of lot. The first electrode roll ER1 newly loaded on the unwinder 111 is also an example of a lot. Accordingly, the server 1020 may store a first roll map of a previous process (e.g., the coating process, the roll pressing process, or the slitting process). The first roll map may correspond to the first electrode roll ER1. In addition, the server 1020 may be configured to generate a second roll map of the second electrode roll ER2 based on the processing of the rewinding stage 100. The second roll map may correspond to the second electrode roll ER2.

As a non-limiting example, the second roll map may be generated by updating the first roll map. Alternatively, the second roll map may be generated based on data generated by the rewinding stage 100 without loading the first roll map.

In a roll map, time series data constructed over time (i.e., according to the progress of a process) may be related to coordinate data collected based on the amount of movement (i.e., the amount of exhaustion or the amount of input) of an electrode sheet ES.

The manufacture of a secondary battery involves a series of different processes, and a leading process affects the following process. In this case, it is difficult to reflect time series data of the leading process in the following process when the time series data of the leading process does not directly match a workpiece, an intermediate product, and a product of the real world. Hereinafter, correcting the following process on the basis of data generated according to a result of the leading process will be referred to as feedforward.

Here, the workpiece is an article provided as a result of each process, e.g., the electrode sheet ES of FIG. 1 on which the coating process, the roll pressing process, and the slitting process are performed. The intermediate product may be one of separators cut by the notching process, electrodes, and an assembly thereof. The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

An electrode process of a secondary battery includes a series of roll-to-roll processes. For feed forwarding, time series data should be related to positions on real-world workpieces, components, intermediate products, and products. Here, the feed forwarding may include controlling processing of the electrode sheet ES based on the roll map of the first electrode roll ER1 generated in the previous process. For example, the roll map of the first electrode roll ER1 processed in a current process may include defect data DD, and the electrode sheet ES unwound from the first electrode roll ER1 in the rewinding stage 100 may be scrapped based on the defect data DD.

The roll map may allow time series data to be related with coordinate data including coordinates of the positions on the real-world workpieces, the components, the intermediate products, and the products. The roll map may provide matching between time series data and the real-world workpieces, the components, the intermediate products, and the products, based on the coordinate data. Accordingly, feedforwarding based on generation of the roll map and the roll map may improve the productivity and quality of the secondary battery manufacturing process by digitizing and objectifying aspects of a process that depend on an operator's discretion.

A roll map of a preceding lot may be used to improve a process for a following lot, and this operation may be referred to as process feedback. The process feedback using the roll map may include identifying process conditions and process parameters that cause problems and defects, based on data included in the roll map.

Furthermore, as described below, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event, e.g., a quality issue, occurs in a battery cell on the market, history data of the manufacture of the battery cell may be retrieved based on the cell ID.

The first rotary encoder 121 may be configured to sense the amount of a part of the electrode sheet ES unwound from the first electrode roll ER1 by the unwinder 111. Accordingly, the first rotary encoder 121 may be configured to generate an input amount signal UWAS indicating a length of the part of the electrode sheet ES unwound by the unwinder 111. The first rotary encoder 121 may be configured to transmit the input amount signal UWAS to the first controller 141.

The second rotary encoder 123 may be configured to sense the amount of the electrode sheet ES wound into the second electrode roll ER2 by the rewinder 113. Accordingly, the second rotary encoder 123 may be configured to generate an exhaustion amount signal WAS indicating a length of the electrode sheet ES wound by the rewinder 113. The second rotary encoder 123 may be configured to transmit the exhaustion amount signal WAS to the first controller 141.

A part of the electrode sheet ES may be scrapped as described below. Accordingly, the length of the electrode sheet ES unwound by the unwinder 111 may be different from the amount of the electrode sheet ES wound by the rewinder 113.

The first controller 141 may be configured to collect coordinate data of the electrode sheet ES based on the exhaustion amount signal WAS and/or the input amount signal UWAS of the electrode sheet ES. For example, the first controller 141 may determine a moving distance of the electrode sheet ES based on the input amount signal UWAS of the electrode sheet ES and thus may be configured to determine a position of a part of the electrode sheet ES to be unwound by the unwinder 111 on the electrode sheet ES at each point in time when an event occurs in the electrode sheet ES. As another example, the first controller 141 may determine a moving distance of the electrode sheet ES based on the exhaustion amount signal WAS of the electrode sheet ES and thus may be configured to determine a position of a part of the electrode sheet ES to be wound by the rewinder 113 on the electrode sheet ES at each point in time when an event occurs in the electrode sheet ES. As another example, the first controller 141 may determine a moving distance of the first electrode sheet ES1 based on each of the exhaustion amount signal WAS and the input amount signal UWAS.

Here, the event may include all processing, inspection, and measurement performed on the electrode sheet ES by the rewinding stage 100, such as cutting the electrode sheet ES, joining of the electrode sheet ES, sensing a datum point on the electrode sheet ES, and sensing a defective tag on the electrode sheet ES. Hereinafter, as a non-limiting example, the technical idea of the present invention will be described with respect to an embodiment in which the first controller 141 collects coordinate data based on the exhaustion amount signal WAS of the electrode sheet ES.

The coordinate data may include a coordinate matching each part of the electrode sheet ES. That is, each of arbitrary points on the electrode sheet ES may match a coordinate. The coordinate may be one-dimensional (1D) quantity in a longitudinal direction of the electrode sheet ES but is not limited thereto. The coordinate may be two-dimensional (2D) quantity in the longitudinal direction and the Y-axis direction in a width direction of the electrode sheet ES.

An NG sensor 131 may be configured to sense one of an NG mark and an NG tag on the electrode sheet ES. The NG mark may be formed by, for example, an inkjet printer or the like and may include information about the position and type of a defect. The NG tag may be attached to the electrode sheet ES by an operator or an NG tag attacher. The NG tag may indicate a position of a defect of the electrode sheet ES. As a non-limiting example, the NG sensor 131 may be a color sensor or a vision machine. The NG sensor 131 may be configured to generate an NG sensing signal NSS. The NG sensor 131 may be configured to transmit the NG sensing signal NSS to the first controller 141.

The first controller 141 may be configured to collect NG sensing data NSD based on the NG sensing signal NSS. The first controller 141 may be configured to relate the NG sensing signal NSS with the coordinate data to collect the NG sensing data NSD. The NG sensing data NSD may include, for example, a defect value indicating whether there is a defect and an aspect of the defect, and a coordinate matching the defect value.

To collect the NG sensing data NSD, the coordinate data may be calibrated based on an offset length OL1. The calibrating of the coordinate data includes compensating for the difference between a part of the electrode sheet ES sensed by the first rotary encoder 121, i.e., a part of the electrode sheet ES wound by the rewinder 113, and a part of the electrode sheet ES sensed by the NG sensor 131.

According to example embodiments, the first controller 141 may calibrate coordinate data collected at the same time as the NG sensing signal NSS based on the offset length OL1 and relate the calibrated coordinate data with the NG sensing signal NSS to collect the NG sensing data NSD. A processor 131P may be configured to transmit the NG sensing data NSD to the first controller 141.

The offset length OL1 is a length of the electrode sheet ES between the NG sensor 131 and the rewinder 113 according to a moving path of the electrode sheet ES. The offset length OL1 may be equal to or greater than a straight line distance between the NG sensor 131 and the rewinder 113.

The second controller 143 may be configured to control operations of the unwinder 111, the rewinder 113, the scrap port 117, and a processing apparatus 119. The second controller 143 may be configured to generate a signal for operating or stopping the unwinder 111, the rewinder 113, the scrap port 117 and the processing apparatus 119. The signal for operating or stopping the unwinder 111, the rewinder 113, the scrap port 117, and the processing apparatus 119 may be generated based on a body including a product ID and details of a manufacturing recipe.

The second controller 143 may receive the NG sensing data NSD from the first controller 141. The second controller 143 may be configured to receive the defect data DD from the server 1020. The defect data DD may be loaded to the second controller 143 via the EIF 1010. Here, the defect data DD may indicate a position of a defect on the first electrode roll ER1. The defect data DD may be included in the first roll map of the first electrode roll ER1.

The second controller 143 may be configured to generate the signal for operating or stopping the unwinder 111, the rewinder 113, the scrap port 117, and the processing apparatus 119 based on the NG sensing data NSD and the defect data DD. When a defect of the electrode sheet ES2 identified using the defect data DD and the NG sensing data NSD approaches the splicing table 115, the second controller 143 may be configured to reduce a movement speed of the electrode sheet ES or to generate a signal for stopping unwinding performed by the unwinder 111 and winding performed by the rewinder 113.

After a start point of the defect (or a point adjacent to the start point of the defect in consideration of a process margin) is cut on the splicing table 215, the scrap port 217 may be configured to wind a defective part DES of the electrode sheet ES as indicated by a thick dashed line. After the defective part DES of the electrode sheet ES is sufficiently wound by the scrap port 117, a part of the electrode sheet ES connected to the scrap port 117 and a part of the electrode sheet ES connected to the unwinder 111 may be separated from each other. Next, a current process may be continued by connecting the part of the electrode sheet ES connected to the unwinder 111 and a part of the electrode sheet ES connected to the rewinder 113. The part of the electrode sheet ES connected to the unwinder 111 and the part of the electrode sheet ES connected to the rewinder 113 may be connected on the splicing table 115.

Conventionally, an electrode sheet is wound without scrapping a defect or a defective part remains in the electrode sheet although the defect is scrapped. According to example embodiments, the defective part DES of the electrode sheet ES is scrapped based on the NG sensing data NSD and the defect data DD and thus the reliability and traceability of scrapping the electrode sheet ES may be improved.

To scrap the defective part DES of the electrode sheet ES, the unwinder 111 and the rewinder 113 may be stopped, and the defective part DEs of the electrode sheet ES may be moved to the scrap port 117 through driving of the unwinder 111 without driving the rewinder 113. The first controller 141 may be configured to collect scrap data SD based on an unwinding amount signal UWAS after the scrapping of the defective part DES of the electrode sheet ES starts. For collection of the scrap data SD, the first controller 141 may receive a signal for controlling the operations of the unwinder 111 and the rewinder 113 from the second controller 143. As another example, the first controller 141 may be configured to collect the scrap data SD based on the amount of rotation of a driving roll of the scrap port 117. As another example, the first controller 141 may be configured to collect the scrap data SD based on a change in a distance between datum points on the electrode sheet ES and a distance between a joint of and a datum point on the electrode sheet ES.

Conventionally, the amount of a part of an electrode sheet to be scrapped is subjectively determined by an operator or is determined based on the mass of a scrapped part of the electrode sheet, and thus, the accuracy of the amount of the part of the electrode sheet to be scrapped is low and the traceability of a process decreases. According to example embodiments, a disposal process that depends on the subjectivity of an operator may be objectified by collecting the scrap data SD indicating the position and amount of the scrapped defective part DE of the electrode sheet ES based on the input amount signal UWAS. Accordingly, the reliability and reliability of the manufacture of a secondary battery may be improved.

A joint sensor 133 may be configured to sense joints of the electrode sheet ES to generate a joint sensing signal JSS. The joints of the electrode sheet ES may be joined together after the defective part DES of the electrode sheet ES is scrapped. As a non-limiting example, the joint sensor 131 may be a color sensor or a vision machine. The joint sensor 133 may be configured to transmit the joint sensing signal JSS to the first controller 141.

The first controller 141 may be configured to collect joint sensing data JSD based on the joint sensing signal JSS. The first controller 141 may be configured to collect the joint sensing data JSD by relating the joint sensing signal JSS with coordinate data.

According to example embodiments, the first controller 141 may calibrate coordinate data collected at the same time as the joint sensing signal JSS based on an offset length OL2 and relate the calibrated coordinate data with the joint sensing signal JSS to collect the joint sensing data JSD.

The offset length OL2 is a length of the electrode sheet ES between the joint sensor 133 and the rewinder 113 according to a moving path of the electrode sheet ES. The offset length OL2 may be equal to or greater than a straight line distance between the joint sensor 133 and the rewinder 113.

The datum point sensor 135 may be configured to sense datum points on the electrode sheet ES to generate a datum point sensing signal DSS. Datum points may be formed at set intervals on the electrode sheet ES to indicate a position on the electrode sheet ES. Each of the datum points may be, for example, 2D barcode including information about an orientation and order sequence thereof. Accordingly, the datum point sensing signal DSS may include a time value corresponding to sensing of a datum point and a sequence value of the datum points. The datum point sensor 135 may be configured to transmit the datum point sensing signal DSS to the first controller 141.

The first controller 141 may be configured to collect datum point sensing data DSD based on the datum point sensing signal DSS. The first controller 141 may be configured to collect the datum point sensing data DSD by relating the datum point sensing signal DSS with coordinate data.

According to example embodiments, the first controller 141 may be configured to calibrate coordinate data collected at the same time as the datum point sensing signal DSS based on an offset length OL3 and relate the calibrated coordinate data with the datum point sensing signal DSS to collect the datum point sensing data DSD.

The offset length OL3 is a length of the electrode sheet ES between the datum point sensor 13r and the rewinder 113 according to a moving path of the electrode sheet ES. The offset length OL3 may be equal to or greater than a stragiht line distance between the datum point sensor 135 and the rewinder 113.

According to example embodiments, data generated based on the scrap data SD, the NG sensing data NSD, and an event of the electrode sheet ES may be calibrated based on the datum point sensing data DSD.

The rewinding stage 100 may further include a measuring device and an inspector. Each of the measuring device and the inspector may include a sensing part and a processing part. The measuring device may be configured to generate measurement data, and the inspector may be configured to generate inspection data. The processing part of the inspector and the processing part of the measuring device may be respectively connected to the sensing part of the inspector and the sensing part of the measuring device by wire or wirelessly.

The measurement data may include a plurality of measured values expressed numerically. For example, the measurement data may include size data, e.g., a thickness and a width, of the electrode sheet ES, data of the amount of loading a coating material on the electrode sheet ES, size data, e.g., a width of an insulating material on the coating material and an overlapping width between the coating material and the insulating material, mismatch data between coated lanes on an upper surface of the electrode sheet ES and coated lanes on a lower surface of the electrode sheet E, and the like. Here, the amount of loading is the amount of the coating material loaded per unit area of the electrode sheet ES, and may be an area density of the coating material.

The inspection data collected by the inspector may include a result of judging the quality of the part of the electrode sheet ES and a process event. For example, the inspection data may include data about the appearance of the electrode sheet ES collected by an image-based inspection device such as a vision machine, data about disconnections and joints of the electrode sheet ES, data about a part of the electrode sheet ES on which sampling inspection is performed, data about a part of the electrode sheet ES to be scrapped, data about a scrapped part of the electrode sheet ES, data about whether the coating material and the insulating material on the electrode sheet ES are defective or not, data about datum points indicating a position of the electrode sheet ES, and defect data such as pinhole defects, crater defects, line defects, crack defects, side ring defects, island defects, folding defects, wrinkle defects, pit defects, and scratch defects. The inspector may be a color sensor, a joint sensor, a datum point sensor, or a vision machine.

The measurement data and the inspection data described above may be time series data. The measurement data and the inspection data may be temporally ordered. Temporal ordering is a main feature of time series data. Temporal ordering is organizing events in an order in which they occur and arrive to be processed. That is, the measurement data and the inspection data may be stored based on a point in time when measurement and inspection are performed, and may be related to time. Accordingly, each of measured values of the measurement data may be matched to time, and each of inspection values of the inspection data may be matched to time.

For example, the measurement data may include a series of measured values (e.g., the amount of loading on the electrode sheet ES or a thickness of the electrode sheet ES), and time values related to the series of measured values. The measured values and the time values may be matched in a one-to-one manner but are not limited thereto. As another example, defect data may include values indicating defects and a time value related to the values indicating defects. Here, the values indicating defects should be understood to mean that the values include information regarding at least one of the presence of defects and the types of defects.

Whether a measured part of the electrode sheet ES is defective or not may be determined by processing the measurement data by a set method. When a measured value of the electrode sheet ES (e.g., the amount of loading on the electrode sheet ES or a thickness of the electrode sheet ES) is in a set range including upper and lower limits, a corresponding part of the electrode sheet ES may be determined as a good-quality part. The corresponding part of the electrode sheet ES may be determined as defective, when the measured value of the electrode sheet ES (e.g., the amount of loading on the electrode sheet ES or the thickness of the electrode sheet ES) is less than the lower limit or greater than the upper limit.

The sensing part of the inspector may be configured to sense a physical quantity of the electrode sheet ES to generate a measurement signal. For example, the sensing part may include a time delay and integration (TDI) camera, a complementary metal oxide semiconductor (CMOS) image sensor, a time-of-flight (TOF) sensor, etc. The sensing part may include an emitter and a receiver that are configured to perform measurement using non-destructive signals such as ultrasound waves, microwaves, terahertz waves, or infrared rays. The sensing part may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device may include a pressure sensor, a temperature sensor, an ultrasonic sensor, a proximity sensor, a door state sensor, a motion tracking sensor, a humidity sensor, a color sensor, an OCR reader, a visible light and infrared sensor, a camera, etc.

The processing parts may be configured to collect an inspection signal and a measurement signal sensed by the sensing parts to generate inspection data and measurement data. The processing part may be connected to the sensing part by wire or wirelessly. The processing part of the measuring device may be configured to calibrate the measurement data by adding an offset measurement amount to each of the plurality of measured values of the measurement data. Due to the progress of a process and the aging of equipment, the measured values of the measurement data may be different from actual values. The processing part may calibrate the measurement data based on the offset measurement amount. The offset measurement amount may be determined based on information given to an equipment system by a method such as a sample test.

According to example embodiments, the inspector and the measuring device may be configured to calibrate coordinate data based on positions thereof. More specifically, the inspector and the measuring device may be configured to calibrate the coordinate data based on an offset length to relate coordinates of the coordinate data with measured values of measurement data or inspection values of inspection data. The calibration of the coordinate data by the inspector and the measuring device is similar to calibration performed using the offset lengths OL1, OL2, and OL3.

The processing part of the measuring device may be configured to collect evaluation data based on the measurement data. The evaluation data may be collected based on a comparison between measured values of a plurality of sections of the electrode sheet ES and a set range. For example, a measured value (or an average) that is in a first range may be determined as normal, a measured value (or an average) that is in a second range greater than the first range may be determined as excessive, a measured value (or an average) that is in a third range greater than the second range may be determined as very excessive, a measured value (or a average) that is in a fourth range less than the first range may be determined as insufficient, and a measured value (or an average) that is in a fifth range less than the fourth range may be determined as very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

The first controller 141 may be in operative communication with the first rotary encoder 121, the second rotary encoder 123, the NG sensor 131, the joint sensor 133, the datum point sensor 135, and additional measuring devices and inspectors through a wired or wireless data network. The data network may be unidirectional or bidirectional. The data network may be implemented by a physical channel, WiFi, public networks and/or specialized networks using Bluetooth or other frequency bands.. The first rotary encoder 121, the second rotary encoder 123, the NG sensor 131, the joint sensor 133, the datum point sensor 135, and the additional measuring devices and inspectors may be configured to collect data from an equipment, a workpiece, an intermediate product, and a product in the rewinding stage 100 or to generate a signal for collecting data therefrom.

The first controller 141 may be configured to transmit the NG sensing data NSD, the joint sensing data JSD, the scrap data SD, and the datum point sensing data DSD to the second controller 143. The NG sensing data NSD, the joint sensing data JSD, the scrap data SD, and the datum point sensing data DSD may be transmitted to the first server 1020 via the second controller 143 and the EIF 1010. The second controller 143 and the EIF 1010 may relay communication of data, including the NG sensing data NSD, the joint sensing data JSD, the scrap data SD, and the datum point sensing data DSD, between the first server 1020 and the first controller 141. However, the present invention is not limited thereto, and the first controller 141 may directly transmit the NG sensing data NSD, the joint sensing data JSD, the scrap data SD, and the datum point sensing data DSD to the server 1020.

For control of a process, a communication line may be installed between the second controller 143 and the server 220 to connect the second controller 143 and the server 220 via the EIF 1010. Accordingly, data transmission through the second controller 143 may contribute to a reduction of resources required for the installation of a communication line and efficient data processing and management, compared to a case in which the first and second rotary encoders 121 and 125 and the datum point sensor 135 directly transmit an input amount signal UWAS, an exhaustion amount signal WAS and a measurement signal to the server 1020 and a case in which the first controller 141 directly transmits the NG sensing data NSD, the joint sensing data JSD, the scrap data SD and the datum point sensing data DSD to the server 1020.

The EIF 1010 may be a device for communication between the second controller 143 of manufacturing equipment and the server 1020 that is an upper server.

The server 1020 may be configured to generate a roll map based on the NG sensing data NSD, the joint sensing data JDS, the scrap data SD, and the datum point sensing data DSD. Roll maps may be generated in units of lots. The roll map may include data about specifications of a lot. The specifications of the lot may include, for example, a lot number, a length of the wound electrode sheet ES, a width of the electrode sheet ES, and materials and a composition used to process the electrode sheet ES.

According to example embodiments, the server 1020 may be a data processing system that supports all activities required to manage the manufacture of a secondary battery, such as work schedule management, work instructions, quality control, and work performance aggregation. The server 1020 may be, for example, a manufacturing execution system (MES). The server 1020 may be configured to perform inputting, processing, outputting, and communication of data necessary for the manufacture of electrodes, including the coating process, a press process, and a slitting process.

According to other example embodiments, the server 1020 may be configured to store and process raw measurement data. The server 1020 may manage the quality of processing the electrode sheet ES by continuously monitoring the processing of the electrode sheet ES based on the inspection data. According to example embodiments, the server 1020 may be a statical process controller (SPC). The server 1020 may collect and analyze manufacturing data in almost real time to identify problematic conditions in a timely manner and provide a notification to an operator before potential problems occur.

According to other example embodiments, the server 1020 may be, for example, a data warehouse, and store the NG sensing data NSD, the scrap ata SD, and the coordinate data for a long time based on a quality assurance period of a product.

According to other example embodiments, the server 1020 may perform all functions of an MES, an SPC, and a data warehouse or be provided separately from the MES, the SPC, and the data warehouse to create a role map.

The first controller 141, the second controller 143, the EIF 1010, and the server 1020 may be implemented by hardware, firmware, software, or a combination thereof. For example, the first controller 141, the second controller 143, the EIF 1010, and the server 1020 may include computing devices such as workstation computers, desktop computers, laptop computers, and tablet computers. The first controller 141, the second controller 143, the EIF 1010, and the server 1020 may include a simple controller, a complex processor such as a microprocessor, a CPU, or a GPU, a processor configured by software, dedicated hardware, or firmware. The first controller 141, the second controller 143, the EIF 1010, and the server 1020 may be implemented, for example, by a general-purpose computer or application-specific hardware such as a digital signal processor (DSP), a field programmable gate array (FPGA), or an application specific integrated circuit (ASIC).

The server 1020 may include a physical server or a cloud server. The server 1020 may provide data and an analysis result to an operator through various frameworks. The framework may include a protocol that supports data transmission to provide updated visualizations when the display device 1030 visualizes data through a user interface and new data is computed by the server 1020. The protocol supporting data transmission may use HTML, JavaScript, and/or JSON.

The server 1020 may include various types of application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics include measured values generated in a time-series manner and may be used to monitor applications and generate a status warning.

The server 1020 may transmit a visualization command VC to the display device 1300, and the display device 1300 may visualize a roll map and display the visualized roll map.

The rewinding stage 100 may implement a plug-in architecture with an API for obtaining data to provide a plug-and-play connection among a measuring device and an inspector. Accordingly, resources in a certain process step and a specific site can be easily transferred to different processes and different sites or new resources can be easily introduced into each process step and each site.

A data network between the components of the secondary battery manufacturing system 10 may include various types of communication channels including unidirectional and bidirectional wired and wireless communications. For example, the data network may include an industrial protocol network such as OPC, Modbus, or ProfiNet. The communication channel may be dedicated conduit communication such as universal serial bus (USB), IEEE 802 (Ethernet), IEEE 1394 (FireWire), or other high-speed data communication standards.

In some embodiments, the secondary battery manufacturing system 10 may further include a manual input system that allows an operator to input manufacturing data. The secondary battery manufacturing system 10 may allow data to be input by an operator with an input tool and a computer-based input of manufacturing data such as Excel file scrapping. The manual input system may be, for example, human-machine interfaces (HMI) of supervisory control and data acquisition (SCADA). Generally, SCADA may include a combination of software and hardware, such as a PLC and remote terminal units (RTUs). HMI is a screen that supports communication between an operator and an SCADA system and is a key element of the SCADA system. For example, manual input by HMI may include selecting a defective type and reflecting performance at the time of completion.

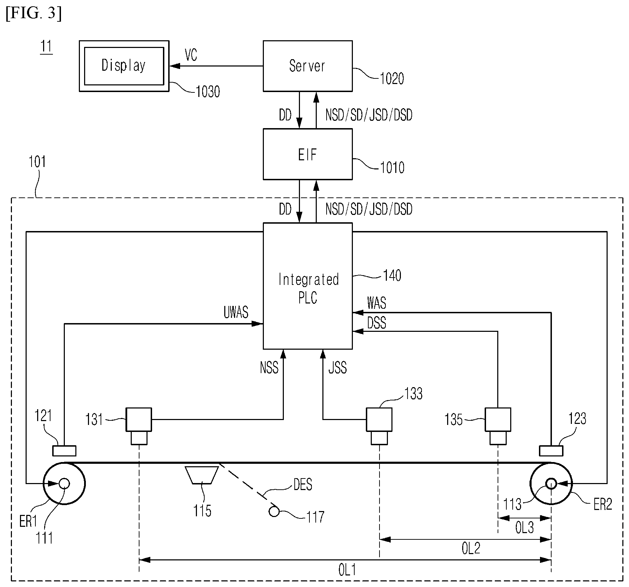

The first controller 141, the second controller 143, and an integrated controller 140 (see FIG. 3) to be described below may be programmable logic controllers (PLCs). A PLC is a special type of microprocessor-based controller that stores instructions using a programmable memory and implements functions such as logic, sequencing, timing, counting and arithmetic operations to control machines and processes. It is easy to operate and program the PLC.

The first and second controllers 141 and 143 may include a power supply, a CPU, an input interface, an output interface, a communication interface, and memory devices. The power supply may be configured to supply power to other components of the first and second controllers 141 and 143, such as the CPU, the input interface, the output interface, the communication interface, and the memory devices, for the first and second controllers 141 and 143. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to control communication between modules that implement logic and convert input signals into output operation signals. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through an input module. A result of processing performed by the CPU may be transmitted to an actuator through the output module. The communication interface may be configured to transmit and receive data between the first and second controllers 141 and 143 or between the second controller 143 and the **EIF 1010**

According to some embodiments, the operations of the first controller 141, the second controller 143, the EIF 1010, and the server 1020 may be implemented as instructions stored on a machine-readable medium that is readable and executable by one or more processors. Here, the machine-readable medium may include an arbitrary mechanism for storing and/or transmitting information in a form readable by a machine (e.g., a computing device). For example, machine-readable media may include a read-only memory (ROM), a random access memory (RAM), a magnetic disk storage medium, an optical storage medium, a flash memory, electrical, optical, acoustic, or other types of radio signals (e.g., carrier waves, infrared signals, digital signals, etc.), and other signals.

The first controller 141, the second controller 143, the EIF 1010, and the server 1020 may include firmware, software, routines, and instructions for performing the above-described operations or processes to be described below. For example, the first controller 141, the second controller 143, the EIF 1010, and the server 1020 may be instantiated in a memory.

The first controller 141 may be implemented by software configured to receive the input amount signal UWAS, the exhaustion amount signal WAS, the NG sensing signal NSS, the joint sensing signal JSS, and the datum point sensing signal DSS, collect coordinate data, the NG sensing data NSD, the joint sensing data JSD, the scrap data SD, and the datum point sensing data DSD, and transmit the NG sensing data NSD, the joint sensing data JSD, and the datum point sensing data DSD.

The second controller 143 may be implemented by software configured to generate a control signal for controlling the unwinder 111, the rewinder 113, the scrap port 117, and the processing apparatus 119 based on a product ID, a product recipe, the defect data DD, and the NG sensing signal NSS, receive the NG sensing data NSD, the joint sensing data JSD, the scrap data SD, and the datum point sensing data DSD, and transmit the NG sensing data NSD, the joint sensing data JSD, the scrap data SD, and the datum point sensing data DSD.

The EIF 1010 may be implemented by software for relaying the transmission of data and information between the second controller 143 and the server 1020. More specifically, the EIF 1010 may be implemented by software configured to control the flow of communication between the second controller 143 and the server 1020 and perform error control, synchronization, order control, addressing, multiplexing, routing, format conversion, etc.

The server 1020 may be implemented by, for example, software configured to transmit a product ID and a product recipe to the second controller 143 and generate a roll map based on NG sensing data NSD, the joint sensing data JSD, the scrap data SD, and the datum point sensing data DSD.

However, the above description is provided only for convenience of description, and the first ontroller 141, the second controller 143, the EIF 1010, and the server 1020 may also result from computing devices, distributed computing devices, processors, firmware, software, routines, and other devices executing routines, and instructions.

An architecture of the secondary battery manufacturing system 100 configured to generate a roll map may be implemented by adding only the first controller 141 to the second controller 143, the EIF 1010, and the server 1020, which are essential elements in a modern process management system. That is, in a system according to example embodiments, resources of an already-installed manufacturing site can be used and additional capital expenditure can be reduced. In addition, applying the same architecture as existing manufacturing equipment to newly constructed manufacturing equipment may lead to improvement of the reliability of the manufacture of a secondary battery, sensing/improvement of problematic processes, and effective introduction of new processes.

(Second Embodiment)

FIG. 3 illustrates a secondary battery manufacturing system 11 according to example embodiments.

Referring to FIG. 3, the secondary battery manufacturing system 11 may include a rewinding stage 101, an EIF 1010, a server 1020, and a display device 1030.

The EIF 1010, the server 1020, and the display device 1030 are substantially the same as those described above with reference to FIG. 2.

The rewinding stage 101 may include an unwinder 111, a rewinder 113, a splicing table 115, a scrap port 117, a first rotary encoder 121, a second rotary encoder 123, a datum point sensor 135, an integrated controller 140, the EIF 1010, the server 1020, and the display device 1030.

The unwinder 111, the rewinder 113, the splicing table 115, the scrap port 117, the first rotary encoder 121, the second rotary encoder 123, the datum point sensor 135, the EIF 1010, the server 1020, and the display device 1030 are substantially the same as those described above with reference to FIG. 2 and thus a redundant description thereof is omitted here.

The integrated controller 140 may be configured to perform the functions of the first controller 141 and the second controller 143 of FIG. 1. Thus, the integrate controller 140 may be implemented by software configured to receive an input amount signal UWAS, an exhaustion amount signal WAS, an NG sensing signal NSS, a joint sensing signal JSS, and a datum point sensing signal DSS, coordinate data, collect NG sensing data NSD, joint sensing data JSD, scrap data SD and datum point sensing data DSD, transmit the NG sensing data NSD, the joint sensing data JSD, the scrap data SD and the datum point sensing data DSD, and generate a control signal for control of the unwinder 111, the rewinder 113, the scrap port 117 and the processing apparatus 119 based on a product ID, a product recipe, defect data DD and the NG sensing data NSD.

(Third Embodiment)

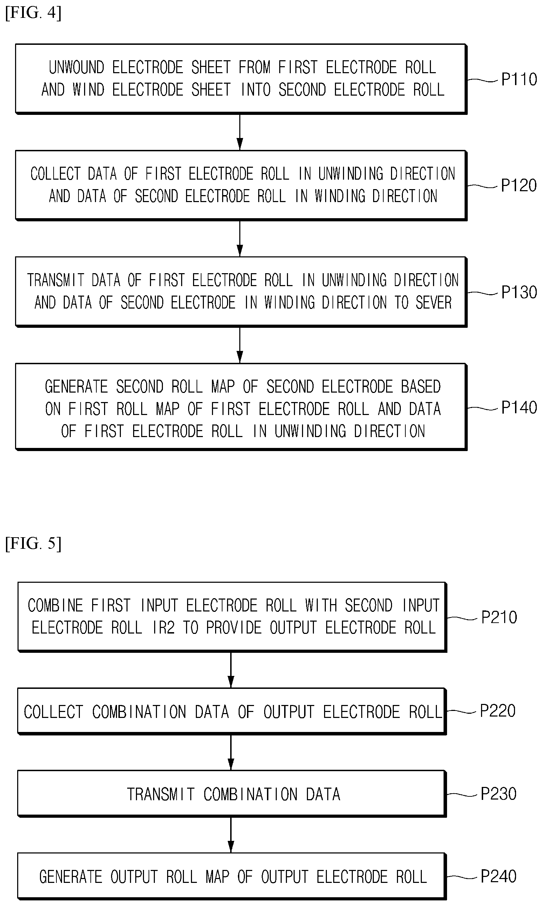

FIG. 4 is a flowchart of a roll map generating method according to example embodiments.

Referring to FIGS. 2 and 4, in P110, an electrode sheet ES may be unwound from a first electrode roll ER1 and wound into a second electrode roll. In the present example, the electrode sheet ES may be unwound and wound without performing substantial processing (e.g., scrapping a defective part DES of the electrode sheet ES).

Next, in P120, unwinding direction data of the first electrode roll ER1 and winding direction data of the second electrode roll ER2 may be collected. For example, the unwinding direction data of the first electrode roll ER1 and the winding direction data of the second electrode roll ER2 may be collected by the first controller 141 or the second controller 143. For example, the unwinding direction data of the first electrode roll ER1 may be used to generate a second roll map of the second electrode roll ER2. The winding direction data of the second electrode roll ER2 may be used for feedforward of a subsequent process based on the second roll map of the second electrode roll ER2.

Next, in P130, the unwinding direction data of the first electrode roll ER1 and the winding direction data of the second electrode roll ER2 may be transmitted to the sever 1020. The unwinding direction data of the first electrode roll ER1 and the winding direction data of the second electrode roll ER2 may be transmitted to the sever 1020 through the EIF 1010.

Next, in P140, the second roll map of the second electrode roll ER2 may be generated based on a first roll map of the first electrode roll ER1 and the unwinding direction data of the first electrode roll ER1. The second roll map of the second electrode roll ER2 may be generated by the server 1020. The generation of the second roll map may include calibrating coordinate data of the first roll map.

An outer part of the first electrode roll ER1 is wound to be an inner part of the second electrode roll ER2, and an inner part thereof is wound to be an outer part of the second electrode roll ER2. Accordingly, the generation of the second roll map of the second electrode roll ER2 may include inverting coordinate data of the first roll map of the first electrode roll ER1. By inverting the coordinate data, a start coordinate of the first roll map may be calibrated to an end coordinate of the second roll map, and an end coordinates thereof may be calibrated to a start coordinate of the second roll map.

For example, when the start coordinate of the first roll map of the first electrode roll ER1 is S1 and the end coordinate thereof is E1, an arbitrary coordinate X of the first roll map of the first electrode roll ER1 may be calibrated to a coordinate X' of the second roll map of the second electrode roll ER2 according to Equation 1 below.

[Equation 1]

$$X' = E1 - (X - S1)$$

For example, when the start coordinate of the first roll map is 0 and the end coordinate thereof is 1600, an coordinate '100' may be calibrated to 1600-(100-0) =1500. Here, the coordinates are expressed in arbitrary units.

Coordinate data of the second roll map of the second electrode roll ER2 is calibrated according to Equation 1 above but a relation between the coordinate data and other data (e.g., measurement data and inspection data) of the first roll map does not change. That is, values of data related to the coordinate X of the first roll map of the first electrode roll ER1 may match the coordinate X' of the second roll map of the second electrode roll ER2.

In addition, each of upper and lower surfaces of the electrode sheet ES may be processed, and the first roll map of the first electrode roll ER1 may include a part (i.e., partial data) corresponding to the upper surface and a part (i.e., partial data) corresponding to the lower surface. Here, the lower surface of the electrode sheet ES may face a bottom of a space in which the rewinding stage 100 is installed, and the upper surface of the electrode sheet ES may face a ceiling(or upward) of the space in which the rewinding stage 100 is installed.

When the winding direction and the unwinding direction of the first electrode roll ER1 are the same, a part of the second roll map of the second electrode roll ER2 corresponding to the lower surface may be generated based on coordinate data of a part of the first roll map of the first electrode roll ER1 corresponding to the lower surface (i.e., through calibration of the coordinate data), and a part of the second roll map of the second electrode roll ER2 corresponding to the upper surface may be generated based on coordinate data of a part of the first roll map of the first electrode roll ER1 corresponding to the upper surface (i.e., through calibration of the coordinate data).

When the winding direction and the unwinding direction of the first electrode roll ER1 are opposite to each other, the part of the second roll map of the second electrode roll ER2 corresponding to the lower surface may be generated based on the coordinate data of the part of the first roll map of the first electrode roll ER1 corresponding to the upper surface (i.e., through calibration of the coordinate data), and the part of the second roll map of the second electrode roll ER2 corresponding to the upper surface may be generated based on the coordinate data of the part of the first roll map of the first electrode roll ER1 corresponding to the lower surface (i.e., through calibration of the coordinate data).

The winding direction of the first electrode roll ER1 is a direction in which the first electrode roll ER1 is wound by process equipment before the rewinding stage 100, and the unwinding direction of the first electrode roll ER1 is a direction in which the first electrode roll ER1 is unwound by the rewinding stage 100.

The winding direction and the unwinding direction of the first electrode roll ER1 are the same, when each of the winding direction and the unwinding direction of the first electrode roll ER1 is a clockwise direction or when each of the winding direction and the unwinding direction of the first electrode roll ER1 is a counterclockwise direction.

The winding direction and the unwinding direction of the first electrode roll ER1 are opposite to each other, when the winding direction of the first electrode roll ER1 is the counterclockwise direction and the unwinding direction of the first electrode roll ER1 is the clockwise direction or when the winding direction of the first electrode roll ER1 is the clockwise direction and the unwinding direction of the first electrode roll ER1 is the counterclockwise direction.

Here, the clockwise direction and the counterclockwise direction may be defined with respect to a case in which the unwinder 111 is located to the left relative to the rewinder 113 in an observer's field of view, as shown in FIGS. 2 and 3. The above definition of directions of rotation is intended to clarify the invention in a non-limiting sense, because the same aspect of rotations of the unwinder 111 and the rewinder 113 may vary according to a direction of observation.

(Fourth Embodiment)

FIG.5 is a flowchart of a roll map generating method according to example embodiments.

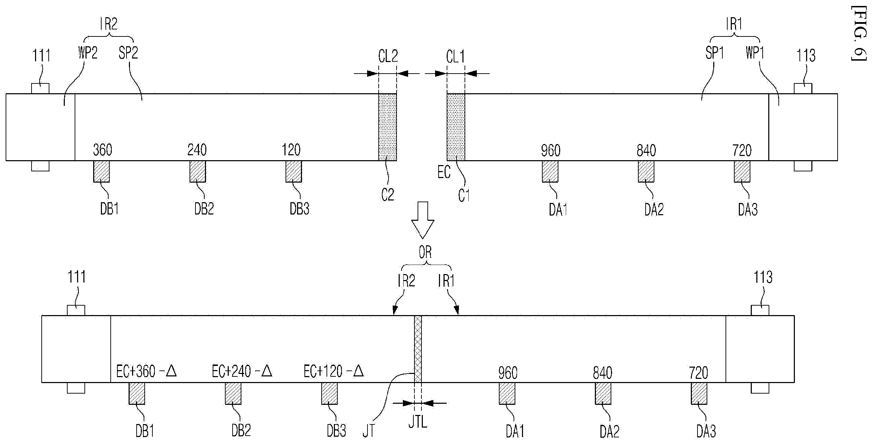

FIG. 6 is a diagram for describing a roll map generating method according to example embodiments.

Referring to FIGS. 2, 5 and 6, in P210, a first input electrode roll IR1 and a second input electrode roll IR2 may be combined with each other to to provide an output electrode roll OR. The first input electrode roll IR1 may be put to the unwinder 111 before the second input electrode roll IR2 and be wound by the rewinder 113. Accordingly, the second input electrode roll IR2 may include a part WP1 wound by the rewinder 113 and a sheet part SP1 that is not wound by the rewinder 113. A length of the first input electrode roll IR1 may be less than a target winding length of a completed electrode roll. To meet the target winding length, the second input electrode roll IR2 that is an additional electrode roll may be combined with the first input electrode roll IR1.

The second input electrode roll IR2 may be loaded to the unwinder 111 to be combined with the first input electrode roll IR1. Accordingly, the second input electrode roll IR2 may include a sheet part SP2 unwound by the unwinder 111 and a wound part WP2 before being unwound by the unwinder 111.

The first input electrode roll IR1 and the second input electrode roll IR2 may be combined with each other by connecting the sheet part SP1 of the first input electrode roll IR1 and the sheet part SP2 of the second electrode roll IR2 using a joint JT. Before the first input electrode roll IR1 and the second input electrode roll IR2 are combined with each other, the sheet parts SP1 and SP2 may be partially cut.

Next, in P220, combination data of the output electrode roll OR may be collected. The combination data of the output electrode roll OR may include whether combining is performed, a length CL1 of a cut part C1 of the sheet part SP1, a length CL2 of a cut part C2 of the sheet part SP2, a start coordinate of the joint JT, and an end coordinate of the joint JT (or a length JTL of the joint JT). The combination data of the output electrode roll OR may be collected by the first controller 141 or the second controller 143. The combination data of the output electrode roll OR may be collected by the integrated controller 140 (see FIG. 3).

Next, in P230, the combination data of the output electrode roll OR may be transmitted to the server 1020. The combination data of the output electrode roll OR may be transmitted to the server 1020 through the EIF 1010.

Next, in P240, an output roll map of the output electrode roll OR may be generated. The output roll map of the output electrode roll OR may be generated based on a first input roll map of the first input electrode roll IR1, a second input roll map of the second input electrode roll IR2, and the combination data. The output roll map of the output electrode roll OR may be generated by the server 1020.

More specifically, in order to generate the output roll map, coordinate data of the first input roll map and coordinate data of the second input roll map may be calibrated by the method described above with reference to FIG. 4. A first inverted roll map may be provided by inverting the coordinate data of the first input roll map, and a second inverted roll map may be provided by inverting the coordinate data of the second input roll map.

The output roll map may be generated by a combination of the first inverted roll map and the second inverted roll map. The output roll map may include the first inverted roll map. The first inverted roll map may be incorporated into the output roll map without being additionally calibrated after inverting the coordinate data as described above with reference to FIG. 4. In order to combine the first inverted roll map with the second inverted roll map, an arbitrary coordinate Y of the coordinate data of the second inverted roll map may be calibrated to Y' based on Equation 2 below.

$$[\text{Equation 2}]$$

$$Y' = EC - Y - \triangle$$

Here, EC denotes a coordinate of an end point on the sheet part SP1 before the first input electrode roll IR1 and the second input electrode roll IR2 are combined. $\triangle$ may be determined according to Equation 3 below.

[Equation 3]

$$\triangle = CL1 - CL2 - JTL$$

Here, JTL denotes a length of the joint JT, CL1 denotes a length of the cut part C1 of the sheet part SP1, and CL2 denotes a length of the cut part C2 of the sheet part SP2. FIG. 6 illustrates coordinates of datum points DA1, DA2, and DA3 on the first input electrode roll IR1 and datum points DB1, DB2, and DB3 on the second input electrode roll IR2 before and after the combination of the first and second input electrode rolls IR1 and IR2, and coordinates other than the coordinates of these datum points may also be calibrated in the same manner based on Equations 2 and 3.

The output roll map of the output electrode roll OR may be provided by simply adding an end coordinate of the first input roll map of the first input electrode roll IR1 to coordinates of the second input roll map of the second input electrode roll IR2 when each of the length JLT of the joint JT, the length CL1 of the cut part C1 of the sheet part SP1, and the length CL2 of the cut part C2 of the sheet part SP2 is zero (i.e., when the sheet parts SP1 and SP2 are not cut before the combination of the first input electrode roll IR1 and the second input electrode roll IR2). A relation between the coordinate data of the second input roll map and other data (e.g., inspection data and measurement data) is the same before and after the calibration of the coordinates of the coordinate data of the second input roll map.

(Fifth Embodiment)

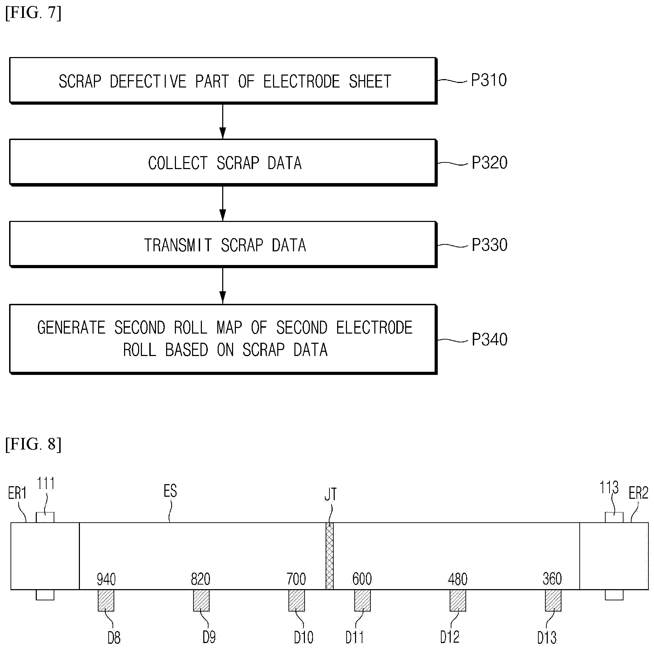

FIG. 7 is a flowchart of a roll map generating method according to example embodiments.

FIG. 8 is a diagram for describing a roll map generating method according to example embodiments. More specifically, FIG. 8 illustrates a part of an electrode sheet ES.

Referring to FIGS. 2, 7 and 8, in P310, the defective part DES of the electrode sheet ES may be scrapped. The defective part DES of the electrode sheet ES may be identified based on defect data DD of a roll map of a first electrode roll ER1 or NG sensing data NSD collected by the first controller 141.

Next, in P320, scrap data SD may be collected. The scrap data SD may be collected by the first controller 141. The scrap data SD may be collected by the controller 140 (see FIG. 3). The scrap data SD may include a start coordinate and an end coordinate of a scrapped part of the electrode sheet ES (or a length of the scrapped part). According to example embodiments, the scrap data SD may be collected based on an unwinding amount signal UWAS in a state in which the rewinder 113 is stopped.

According to example embodiments, the scrap data SD may be collected based on a distance between datum points and a joint on the electrode sheet ES. For example, in FIG. 8, datum points D8, D9, D10, D11, D12, and D13 may be formed at intervals of about 120 (arbitrary units). Because an interval between the datum points D10 and D11 is 100, a part of the electrode sheet ES between the datum points D10 and D11 is scrapped and it is confirmed that a scrapped length is 20. In addition, a start coordinates of the scrapped part may be determined based on a distance between the joint JT and the datum point D11 closest to or before the joint JT.

Next, in P330, the scrap data SD may be transmitted to the server 1020. The scrap data SD may be transmitted to the server 1020 through the EIF 1010.

Next, in P340, a second roll map of a second electrode roll ER2 may be generated based on the scrap data SD and a first roll map of the first electrode roll ER1. The second roll map of the second electrode roll ER2 may be generated by the server 1020. To generate the second roll map, coordinate data of the first roll map may be calibrated based on the method described above with reference to FIG. 4. The generation of the second roll map may include calibrating the coordinate data of the first roll map of the first electrode roll ER1 based on the scrap data SD. Accordingly, a coordinate matching a value of data (e.g., a value of inspection data and a value of measurement data) following the joint JT may be reduced by the scrapped length (e.g., 20). To generate the second roll map of the second electrode roll ER2, the coordinate data of the first roll map of the first electrode roll ER1 may be calibrated by the method described above with reference to FIG. 7, in addition to the calibration of the coordinate data by the method described above with reference to FIG. 4.

The calibration of coordinate data according to winding and unwinding, the calibration of coordinate data according to the combination of the first and second input electrode rolls IR1 and IR2, the calibration of coordinate data according to scrapping a part of the electrode sheet ES, and the generation of a roll map through the calibration of the coordinate data have been described above with reference to FIGS. 4 to 8. Those of ordinary skill in the art would be able to easily derive the calibration of coordinate data through a combination of the method of FIG. 4, the method of FIG. 5, and the method of FIG. 7 and the generation of a roll map through the calibration of the coordinate data, based on the above description.

(Sixth Embodiment)

As described above with reference to FIGS. 1 and 2, a roll map may be generated in units of processes. That is, when an electrode roll is completed by the coating device 200, a roll map of the coating process may be generated based on data collected from the completed electrode roll, when an electrode roll is completed by the roll pressing device 300, a roll map of the roll pressing process may be generated based on data collected from the completed electrode roll, and when an electrode roll is completed by the slitting device 400, a roll map of the slitting process may be generated based on data collected from the completed electrode roll.

To secure traceability of a process, data collected from a preceding roll-to-roll process should be matched to data of a subsequent roll-to-roll process. The matching of the data is based on coordinates of the electrode sheet ES and thus rules are required for matching coordinates collected in the preceding roll-to-roll process to coordinates collected in the subsequent roll-to-roll process.

The conversion of the coordinates collected in the preceding roll-to-roll process and the coordinates collected in the subsequent roll-to-roll process may depend on a winding direction in the preceding roll-to-roll process (e.g., the roll pressing process and the slitting process) and a loading method (or an unwinding direction) (e.g., processing performed by the rewinding stage 100) in the subsequent roll-to-roll process.

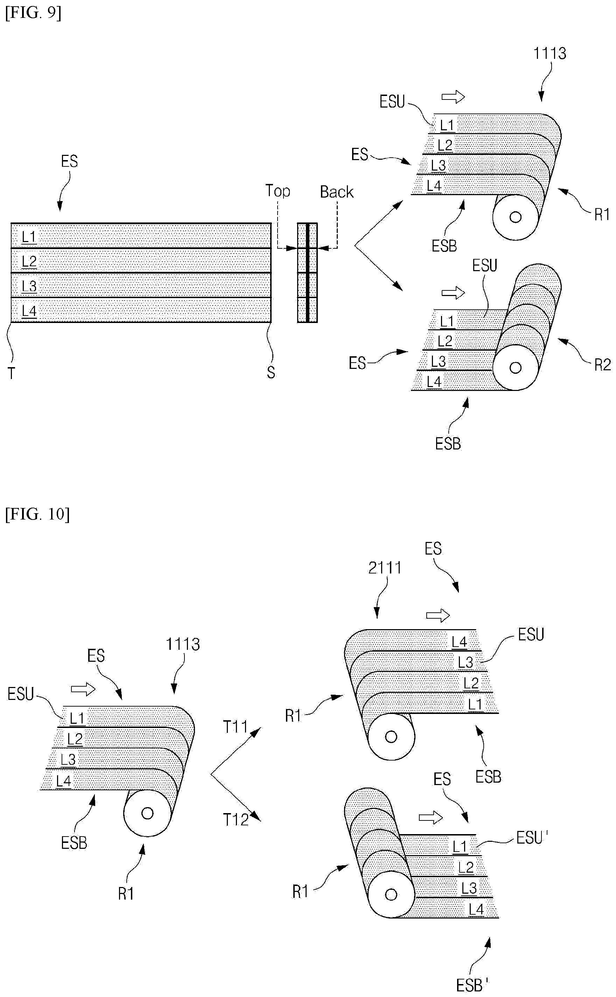

More specifically, the upper and lower surfaces of the electrode sheet ES may be switched or an order of first to fourth lanes L1, L2, L3, and L4 (see FIG. 10) may be reversed according to the winding direction in the preceding roll-to-roll process (e.g., the roll pressing process and the slitting process) and the loading method (or the unwinding direction) (e.g., processing performed by the rewinding stage 100) in the subsequent roll-to-roll process.

Here, the lower surface of the electrode sheet ES may face the bottom surface of the space in which the rewinding stages 100, the coating device 200, the roll pressing device 300, the slitting device 400, and the notching device 500 are installed, and the upper surface of the electrode sheet ES is opposite to the lower surface thereof.

FIG. 9 illustrates winding of an electrode sheet ES including first to fourth lanes L1, L2, L3 and L4.

FIG. 9 illustrates an example in which the electrode sheet ES includes four lanes L1, L2, L3, and L4 but is intended to only provide an example, and the technical idea of the present invention is not limited thereto in any sense. The electrode sheet ES may include two, three, or five or more lanes.

Each of the first to fourth lanes L1, L2, L3 and L4 may extend in a machine direction of the electrode sheet E ad be coated parts of the electrode sheet ES. Although not clearly shown, there may be one or more uncoated parts between the first to fourth lanes L1, L2, L3, and L4. For example, there may be an uncoated part, which extends in the machine direction of the electrode sheet ES, between the second and third lanes L2 and L3, the first and second lanes L1 and L2 may be continuous in a transverse direction, and the first and second lanes L1 and L2 may be continuous in the transverse direction.

According to some embodiments, the electrode sheet ES may be wound into a first electrode roll R1 by an over winding method. In the over winding method, the electrode sheet ES may be wound into the first electrode roll R1 while being positioned above a central axis of a first rewinder 1113. Over winding may also be referred to as clockwise winding.

According to some other embodiments, the electrode sheet ES may be wound into a second electrode roll R2 by a under winding method. In the under winding method, the electrode sheet ES may be wound into the second electrode roll R2 while being positioned below the central axis of the first rewinder 1113. The under winding may also be referred to as counterclockwise winding.

For the first electrode roll R1, the upper surface of the electrode sheet ES may be positioned at outward relative to the lower surface of the electrode sheet ES with respect to the first electrode roll R1. For the second electrode roll R2, the lower surface of the electrode sheet ES may be positioned outward relative to the upper surface of the electrode sheet ES with respect to the second electrode roll R2.

FIG. 10 illustrates aspects in which a first electrode roll R1 is unwound in a subsequent roll-to-roll process. In FIG. 10, hollow arrows indicate a machine direction of the electrode sheet ES.

Referring to FIG. 10, the first electrode roll R1 may be provided through over winding by a first rewinder 1113 in a preceding roll-to-roll process. The first electrode roll R1 may be loaded on a second unwinder 2111 in the subsequent roll-to-roll process. The first rewinder 1113 may be included in one of the roll pressing device 300 and the slitting device 400 of FIG. 1. The second unwinder 2111 may be included in the rewinding stage 100 of FIG. 1.

According to example embodiments, the second unwinder 2111 may be configured to unwind the electrode sheet ES from the first electrode roll R1 by the over unwinding method, as indicated by an arrow T11. During over unwinding, the electrode sheet ES may be positioned above a central axis of the second unwinder 2111. Over unwinding may also be referred to as clockwise unwinding.

In this case, the upper and lower parts of the electrode sheet ES may be maintained but the order of the first to fourth lanes L1, L2, L3, and L4 may be inverted. An upper surface ESU of the electrode sheet ES wound into the first electrode roll R1 in the preceding roll-to-roll process may correspond to an upper surface ESU of the electrode sheet ES unwound from the first electrode roll R1 in the subsequent roll-to-roll process. A lower surface ESB of the electrode sheet ES unwound from the first electrode roll R1 in the preceding roll-to-roll process may correspond to a lower surface ESB of the electrode sheet ES unwound from the first electrode roll R1 in the subsequent roll-to-roll process. The first to fourth lanes L1, L2, L3, and L4 may be arranged from the left with respect to the machine direction of the electrode sheet ES in the preceding roll-to-roll process, and arranged from the right with respect to the machine direction of the electrode sheet ES in the subsequent roll-to-roll process.

According to other example embodiments, the second unwinder 2111 may be configured to unwind the electrode sheet ES from the first electrode roll R1 by the under unwinding method, as indicated by an arrow T12. During under unwinding, the electrode sheet ES may be positioned below the central axis of the second unwinder 2111. Under unwinding may also be referred to as counterclockwise unwinding.

In this case, the order of the first to fourth lanes L1, L2, L3, and L4 may be inverted but the upper and lower parts of the electrode sheet ES may be maintained. The upper surface ESU of the electrode sheet ES wound into the first electrode roll R1 in the preceding roll-to-roll process may correspond to a lower surface ESB' of the electrode sheet ES unwound from the first electrode roll R1 in the subsequent roll-to-roll process. The lower surface ESB of the electrode sheet ES wound into the first electrode roll R1 in the preceding roll-to-roll process may correspond to an lower surface ESU' of the electrode sheet ES unwound from the first electrode roll R1 in the subsequent roll-to-roll process. In each of the preceding roll-to-roll process and the subsequent roll-to-roll process, the first to fourth lanes L1, L2, L3, and L4 may be arranged from the left with respect to the machine direction of the electrode sheet ES.

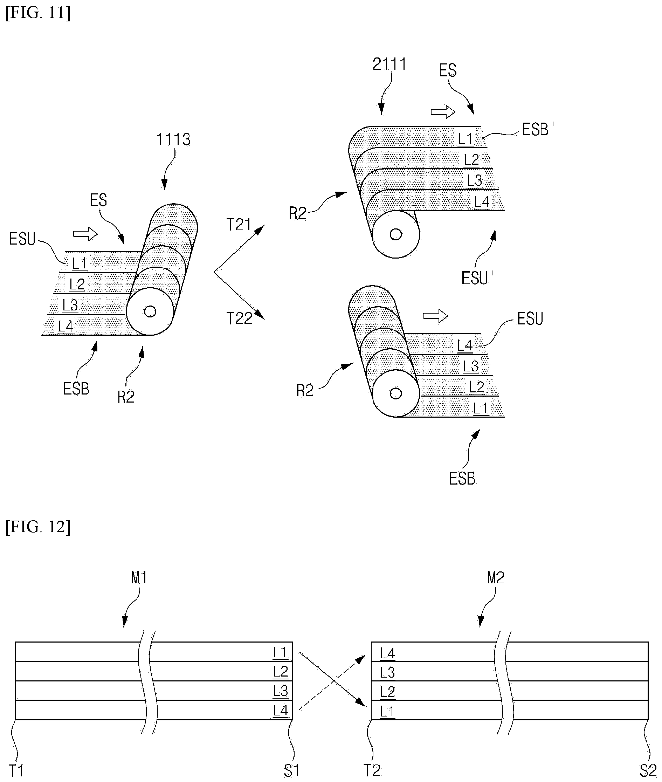

FIG. 11 illustrates aspects in which a second electrode roll ER2 is unwound in a subsequent roll-to-roll process.

Referring to FIG. 11, the second electrode roll R2 may be provided through under winding by the first rewinder 1113 in a preceding roll-to-roll process. The first electrode roll R1 may be loaded on the second unwinder 2111 in the subsequent roll-to-roll process.

According to example embodiments, the second unwinder 2111 may be configured to unwind the electrode sheet ES from the second electrode roll R2 by the over unwinding method, as indicated by an arrow T21.

In this case, the upper and lower parts of the electrode sheet ES may be inverted but the order of the first to fourth lanes L1, L2, L3, and L4 may be maintained. The upper surface ESU of the electrode sheet ES wound into the second electrode roll R2 in the preceding roll-to-roll process may correspond to the lower surface ESB' of the electrode sheet ES unwound from the second electrode roll R2 in the subsequent roll-to-roll process. The lower surface ESB of the electrode sheet ES wound into the second electrode roll R2 in the preceding roll-to-roll process may correspond to the upper surface ESU' of the electrode sheet ES unwound from the second electrode roll R2 in the subsequent roll-to-roll process. In each of the preceding roll-to-roll process and the subsequent roll-to-roll process, the first to fourth lanes L1, L2, L3, and L4 may be arranged from the left with respect to the machine direction of the electrode sheet ES.

According to other example embodiments, the second unwinder 2111 may be configured to unwind the electrode sheet ES from the second electrode roll R2 by the under unwinding method, as indicated by an arrow T22.

In this case, the upper and lower parts of the electrode sheet ES may be maintained but the order of the first to fourth lanes L1, L2, L3, and L4 may be inverted. The upper surface ESU of the electrode sheet ES wound into the second electrode roll R2 in the preceding roll-to-roll process may correspond to the upper surface ESU of the electrode sheet ES unwound from the second electrode roll R2 in the subsequent roll-to-roll process. The lower surface ESB of the electrode sheet ES wound into the second electrode roll R1 in the preceding roll-to-roll process may correspond to the lower surface ESB of the electrode sheet ES unwound from the second electrode roll R2 in the subsequent roll-to-roll process. The first to fourth lanes L1, L2, L3, and L4 may be arranged from the left with respect to the machine direction of the electrode sheet ES in the preceding roll-to-roll process, and arranged from the right with respect to the machine direction of the electrode sheet ES in the subsequent roll-to-roll process.

Upper and lower surfaces of an electrode may be maintained or switched and an order of the first to fourth lanes L1, L2, L3 and L4 in a width direction may be changed or maintained, according to a direction in which an electrode roll is wound in a preceding roll-to-roll process and a direction in which the electrode roll is unwound in a subsequent roll-to-roll process.

FIG. 12 is a diagram illustrating matching between first and second roll maps M1 and M2 in aspects of winding and unwinding corresponding to the arrow T11 of FIG. 10.

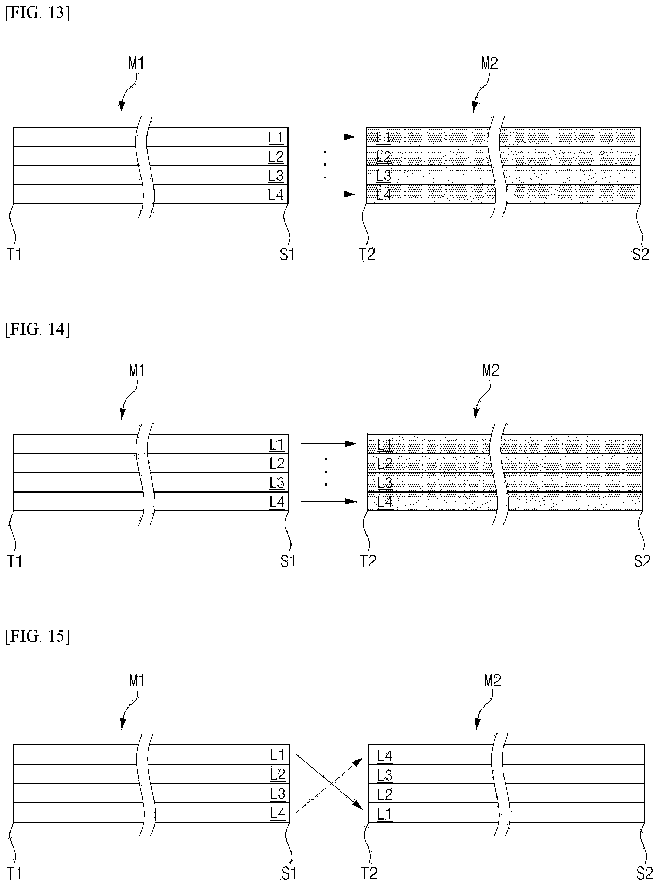

FIG. 13 is a diagram illustrating matching between the first and second roll maps M1 and M2 in aspects of winding and unwinding corresponding to the arrow T12 of FIG. 10.

FIG. 14 is a diagram illustrating matching between the first and second roll maps M1 and M2 in aspects of winding and unwinding corresponding to the arrow T21 of FIG. 12.

FIG. 15 is a diagram illustrating matching between the first and second roll maps M1 and M2 in aspects of winding and unwinding corresponding to the arrow T22 of FIG. 12.

FIGS. 12 to 15 illustrate a relation between the first roll map M1 generated in a preceding roll-to-roll process and the second roll map M2 generated in a subsequent roll-to-roll process. In FIGS. 12 to 15, a lower surface of an electrode sheet ES is highlighted in gray to distinguish between upper and lower parts of the electrode sheet ES.

Referring to FIGS. 2 and 10 to 15, the server 1020 may be configured to match the first roll map M1 generated in a preceding roll-to-roll process and the second roll map M2 generated in a subsequent roll-to-roll process based on whether the upper and lower surfaces of the electrode sheet ES are switched and whether the order of the lanes L1, L2, L3, and L4 of the electrode sheet ES is reversed.

In some embodiments, the server 1020 may be configured to store an aspect of winding in the preceding roll-to-roll process and an aspect of unwinding in the subsequent roll-to-roll process. In some embodiments, the server 1020 may include a storage device configured to store lot information including the aspect of winding in the preceding roll-to-roll process and the aspect of unwinding in the subsequent roll-to-roll process.

As in the cases indicated by the arrows T11 and T22, an upper surface and lower surface of an electrode are maintained but the order of the first to fourth lanes L1, L2, L3, and L4 is reversed when a winding direction in the preceding roll-to-roll process and an unwinding direction in the subsequent roll-to-roll process are the same (i.e., in the case of over winding and over unwinding or in the case of under winding and under unwinding).

As in the cases indicated by the arrows T12 and T21, the order of the first to fourth lanes L1, L2, L3, and L4 is maintained but upper and lower parts of the electrode sheet ES are switched when the winding direction in the preceding roll-to-roll process and the unwinding direction in the subsequent roll-to-roll process are different from each other (i.e., in the case of over winding and under unwinding or in the case of under winding and over unwinding).

In each of the cases indicated by the arrows T11, T12, T21, and T22, a start point S1 on the first roll map M1 corresponds to an end point T2 on the second roll map M2, and an end point T1 on the first roll map M1 corresponds to a start point S2 on the second roll map M2. This is because an outer part of an electrode roll processed relatively late in the roll-to-roll process is first unwound in a subsequent process.

The server 1020 may be configured to read the information about the aspect of winding in the preceding roll-to-roll process and the aspect of unwinding in the subsequent roll-to-roll process and match positions corresponding thereto according to the rules shown in FIGS. 12 to 15.

Referring to FIGS. 10 and 12, in the case of over winding and over unwinding indicated by the arrow T11, the server 1020 may be configured to match data of the first roll map M1 collected from the upper surface ESU of the electrode sheet ES before being wound into the first electrode roll R1 to data of the second roll map M2 collected from the upper surface ESU of the electrode sheet ES unwound from the first electrode roll R1, and match data of the first roll map M1 collected from the lower surface ESB of the electrode sheet ES before being wound into the first electrode roll R1 to data of the second roll map M2 collected from the lower surface ESB of the electrode sheet ES unwound from the first electrode roll R1. The server 1020 is configured to invert coordinate values to match the start point S1 on the first roll map M1 to the end point T2 on the second roll map M2 and match the end point T1 on the first roll map M1 to the start point S2 on the second roll map M2. The server 1020 may be configured to match the first roll map M1 and the second roll map M2 based on inversion of the order of the first to fourth lanes L1, L2, L3, and L4. The server 1020 may be configured to match data of the first roll map M1 collected from the first lane L1 of the electrode sheet ES before being wound into the first electrode roll R1 to data of the second roll map M2 collected from the fourth lane L4 of the electrode sheet ES unwound from the first electrode roll R1, match data of the first roll map M1 collected from the second lane L2 of the electrode sheet ES before being wound into the first electrode roll R1 to data of the second roll map M2 collected from the third lane L3 of the electrode sheet ES unwound from the first electrode roll R1, match data of the first roll map M1 collected from the third lane L3 of the electrode sheet ES before being wound into the first electrode roll R1 to data of the second roll map M2 collected from the second lane L2 of the electrode sheet ES unwound from the first electrode roll R1, and match data of the first roll map M1 collected from the fourth lane L4 of the electrode sheet ES before being wound into the first electrode roll R1 to data of the second roll map M2 collected from the first lane L1 of the electrode sheet ES unwound from the first electrode roll R1.

Referring to FIGS. 11 and 15, in the case of under winding and under unwinding indicated by the arrow T22, the server 1020 may be configured to match data of the first roll map M1 collected from the upper surface ESU of the electrode sheet ES before being wound into the first electrode roll R1 to data of the second roll map M2 collected from the upper surface ESU of the electrode sheet ES unwound from the first electrode roll R1, and match data of the first roll map M1 collected from the lower surface ESB of the electrode sheet ES before being wound into the first electrode roll R1 to data of the second roll map M2 collected from the lower surface ESB of the electrode sheet ES unwound from the first electrode roll R1. The server 1020 is configured to invert coordinate values to match the start point S1 on the first roll map M1 to the end point T2 on the second roll map M2 and match the end point T1 on the first roll map M1 to the start point S2 on the second roll map M2. The server 1020 may be configured to match the first roll map M1 and the second roll map M2 based on the inversion of the order of the first to fourth lanes L1, L2, L3, and L4. The server 1020 may be configured to match data of the first roll map M1 collected from the first lane L1 of the electrode sheet ES before being wound into the first electrode roll R1 to data of the second roll map M2 collected from the fourth lane L4 of the electrode sheet ES unwound from the first electrode roll R1, match data of the first roll map M1 collected from the second lane L2 of the electrode sheet ES before being wound into the first electrode roll R1 to data of the second roll map M2 collected from the third lane L3 of the electrode sheet ES unwound from the first electrode roll R1, match data of the first roll map M1 collected from the third lane L3 of the electrode sheet ES before being wound into the first electrode roll R1 to data of the second roll map M2 collected from the second lane L2 of the electrode sheet ES unwound from the first electrode roll R1, and match data of the first roll map M1 collected from the fourth lane L4 of the electrode sheet ES before being wound into the first electrode roll R1 to data of the second roll map M2 collected from the first lane L1 of the electrode sheet ES unwound from the first electrode roll R1.

Referring to FIGS. 10 and 13, in the case of over winding and under unwinding indicated by the arrow T12, the server 1020 may be configured to match data of the first roll map M1 collected from the upper surface ESU of the electrode sheet ES before being wound into the second electrode roll R2 to data of the second roll map M2 collected from a lower surface ESB' of the electrode sheet ES unwound from the second electrode roll R2, and match data of the first roll map M1 collected from the lower surface ESB of the electrode sheet ES before being wound into the second electrode roll R2 to data of the second roll map M2 collected from an upper surface ESU' of the electrode sheet ES unwound from the second electrode roll R2. The server 1020 is configured to invert coordinate values to match the start point S1 on the first roll map M1 to the end point T2 on the second roll map M2 and match the end point T1 on the first roll map M1 to the start point S2 on the second roll map M2. The server 1020 may be configured to match the first roll map M1 and the second roll map M2 based on the maintenance of the order of the first to fourth lanes L1, L2, L3, and L4. The server 1020 may be configured to match data of the first roll map M1 collected from the first lane L1 of the electrode sheet ES before being wound into the second electrode roll R2 to data of the second roll map M2 collected from the first lane L1 of the electrode sheet ES unwound from the second electrode roll R2, match data of the first roll map M1 collected from the second lane L2 of the electrode sheet ES befoire being wound into the second electrode roll R2 to data of the second roll map M2 collected from the second lane L2 of the electrode sheet ES unwound from the second electrode roll R2, match data of the first roll map M1 collected from the third lane L3 of the electrode sheet ES before being wound into the second electrode roll R2 to data of the second roll map M2 collected from the third lane L3 of the electrode sheet ES unwound from the second electrode roll R2, and match data of the first roll map M1 collected from the fourth lane L4 of the electrode sheet ES before being wound into the second electrode roll R2 to data of the second roll map M2 collected from the fourth lane L4 of the electrode sheet ES unwound from the second electrode roll R2.

Referring to FIGS. 11 and 14, in the case of under winding and over unwinding indicated by the arrow T21, the server 1020 may be configured to match data of the first roll map M1 collected from the upper surface ESU of the electrode sheet ES before being wound into the second electrode roll R2 to data of the second roll map M2 collected from a lower surface ESB' of the electrode sheet ES unwound from the second electrode roll R2, and match data of the first roll map M1 collected from the lower surface ESB of the electrode sheet ES before being wound into the second electrode roll R2 to data of the second roll map M2 collected from an upper surface ESU' of the electrode sheet ES unwound from the second electrode roll R2. The server 1020 is configured to invert coordinate values to match the start point S1 on the first roll map M1 to the end point T2 on the second roll map M2 and match the end point T1 on the first roll map M1 to the start point S2 on the second roll map M2. The server 1020 may be configured to match the first roll map M1 and the second roll map M2 based on the maintenance of the order of the first to fourth lanes L1, L2, L3, and L4. The server 1020 may be configured to match data of the first roll map M1 collected from the first lane L1 of the electrode sheet ES before being wound into the second electrode roll R2 to data of the second roll map M2 collected from the first lane L1 of the electrode sheet ES unwound from the second electrode roll R2, match data of the first roll map M1 collected from the second lane L2 of the electrode sheet ES before being wound into the second electrode roll R2 to data of the second roll map M2 collected from the second lane L2 of the electrode sheet ES unwound from the second electrode roll R2, match data of the first roll map M1 collected from the third lane L3 of the electrode sheet ES before being wound into the second electrode roll R2 to data of the second roll map M2 collected from the third lane L3 of the electrode sheet ES unwound from the second electrode roll R2, and match data of the first roll map M1 collected from the fourth lane L4 of the electrode sheet ES before being wound into the second electrode roll R2 to data of the second roll map M2 collected from the fourth lane L4 of the electrode sheet ES unwound from the second electrode roll R2.

As indicated by the arrows T11 and T22 of FIGS. 10 and 11, when a winding direction of a rewinder in a preceding roll-to-roll process and an unwinding direction of an unwinder in a subsequent roll-to-roll process are the same, the first roll map M1 and the second roll map M2 may be matched to each other by matching the upper surfaces thereof and matching the lower surfaces thereof.

As indicated by the arrows T12 and T21, when the winding direction of the rewinder in the preceding roll-to-roll process and the unwinding direction of the unwinder in the subsequent roll-to-roll process are different from each other, the first roll map M1 and the second roll map M2 may be matched to each other by matching the upper surface of the first roll map M1 to the lower surface of the second roll map M2 and matching the lower surface of the first roll map M1 to the upper surface of the second roll map M2 while maintaining the order of the first to fourth lanes L1, L2, L3, and L4.

In some embodiments, the server 1020 may be configured to match the first roll map M1 and the second roll map M2 and display information about the matching of the first and second roll maps M1 and M2 on the display device 1030. In some embodiments, the server 1020 may be configured to match the first roll map M1 and the second roll map M2 to additionally generate one integrated roll map . In some embodiments, the server 1020 may be configured to transmit to the display device 1030 a signal for displaying one integrated roll map by matching the first and second roll maps M1 and M2.

In some embodiments, both the first roll map M1 and the second roll map M2 may include information about removed parts. During a preceding roll-to-roll process and a subsequent roll-to-roll process, a part of an electrode may be removed due to a defect or the like, and the removed part part of the electrode may be displayed on both the first roll map M1 and the second roll map M2. Here, a part of the electrode remaining as an effective part that is not removed through roll-to-roll processes is referred to as a survival electrode part. The first roll map M1 and the second roll map M2 may include not only the survival electrode part but also the removed part.

Therefore, the removed part of the first roll map M1 also exists on a position on the second roll map M2 corresponding thereto. The survival electrode part of the first roll map M1 also exists on a position on the second roll map M2 corresponding thereto. In some embodiments, the survival electrode part of the first roll map M1 may be partially removed in a subsequent roll-to-roll process and thus may exist as a removed part on a position on the the second roll map M2 corresponding thereto.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A roll map generating method comprising:

   unwinding an electrode sheet from a first electrode roll and winding the electrode sheet into a second electrode roll;
   collecting data of the first electrode roll in an unwinding direction; and
   generating a second roll map of the second electrode roll based on a first roll map of the first electrode roll and the data of the first electrode roll in the unwinding direction.

2. The roll map generating method of claim 1, wherein the second roll map is generated by inversion of coordinate values of coordinate data of the first roll map.

3. The roll map generating method of claim 2, wherein a start coordinate of the first roll map is calibrated to an end coordinate of the second roll map and an end coordinate of the first roll map is calibrated to a start coordinate of the second roll map by the inversion of the coordinate values of the coordinate data.

4. The roll map generating method of claim 1, wherein the first roll map includes winding direction data of the first electrode roll.

5. The roll map generating method of claim 4, wherein the electrode sheet includes an upper surface and a lower surface opposite to the upper surface,

   the first roll map includes a part corresponding to the upper surface of the electrode sheet and a part corresponding to the lower surface of the electrode sheet, and
   the second roll map includes a part corresponding to the upper surface of the electrode sheet and a part corresponding to the lower surface of the electrode sheet.

6. The roll map generating method of claim 5, wherein the unwinding direction of the first electrode roll is the same as the winding direction of the first electrode roll,

   the part of the second roll map corresponding to the lower surface of the electrode sheet is generated based on the part of the first roll map corresponding to the lower surface of the electrode sheet, and
   the part of the second roll map corresponding to the upper surface of the electrode sheet is generated based on the part of the first roll map corresponding to the upper surface of the electrode sheet.

7. The roll map generating method of claim 5, wherein the unwinding direction of the first electrode roll is opposite to the winding direction of the first electrode roll,

   the part of the second roll map corresponding to the lower surface of the electrode sheet is generated based on the part of the first roll map corresponding to the upper surface of the electrode sheet, and
   the part of the second roll map corresponding to the upper surface of the electrode sheet is generated based on the part of the first roll map corresponding to the lower surface of the electrode sheet.

8. A roll map generating method comprising:

combining a first input electrode roll with a second input electrode roll to provide an output electrode roll;

collecting combination data of the output electrode roll; and

generating an output roll map of the output electrode roll based on the combination data, a first input roll map of the first input electrode roll, and a second input roll map of the second input electrode roll.

9. The roll map generating method of claim 8, wherein the generating of the output roll map includes generating a first inverted roll map by inverting coordinate values of coordinate data of the first input roll map and generating a second inverted roll map by inverting coordinate values of coordinate data of the second input roll map.

10. The roll map generating method of claim 9, wherein the first inverted roll map is incorporated into the output roll map.

11. The roll map generating method of claim 9, wherein coordinate data of the second inverted roll map is calibrated based on an end coordinate of the first inverted roll map.

12. A roll map generating method comprising:

unwinding an electrode sheet from a first electrode roll;

scrapping a defective part of the electrode sheet;

winding the electrode sheet into a second electrode roll,

collecting scrap data indicating the scrapped part of the electrode sheet; and

generating a second roll map of the second electrode roll based on a first roll map of the first electrode roll and the scrap data.

13. The roll map generating method of claim 12, wherein the scrap data includes a start coordinate and a length of the scrapped part of the electrode sheet.

14. The roll map generating method of claim 13, wherein the generating the second roll map includes inverting coordinate values of coordinate data of the first roll map.

15. The roll map generating method of claim 14, wherein coordinate data of the second roll map is calibrated based on the start coordinate and length of the scrapped part of the electrode sheet.

16. A roll map generating method comprising:

unwinding an electrode sheet from a first electrode roll completed in a first roll-to-roll process, wherein the electrode sheet includes first and second lanes arranged in a transverse direction;

performing a second roll-to-roll process on the electrode sheet;

winding the electrode sheet into a second electrode roll;

generating a second roll map of the second electrode roll, wherein the second roll map includes second data collected from the electrode sheet in the second roll-to-roll process and a second coordinate matching the second data and indicating a position on the electrode sheet; and

matching a first roll map of the first electrode roll to the second roll map based on a winding direction and an unwinding direction of the first electrode roll in the first roll-to-roll process, wherein the first roll map includes first data of the electrode sheet collected in the first roll-to-roll process and a first coordinate matching the first data and indicating a position on the electrode sheet.

17. The roll map generating method of claim 16, wherein the first roll-to-roll process includes a roll pressing process or a slitting process.

18. The roll map generating method of claim 16, wherein the second roll-to-roll process includes scrapping of a defective part of the electrode sheet.

19. The roll map generating method of claim 16, wherein the first data of the first roll map collected from an upper surface of the electrode sheet is matched to the second data of the second roll map collected from the upper surface of the electrode sheet, and the first data of the first roll map collected from a lower surface of the electrode sheet is matched to the second data of the second roll map collected from the lower surface of the electrode sheet.

20. The roll map generating method of claim 19, wherein, in the first roll-to-roll process, the electrode sheet is wound into the first electrode roll through over winding, and in the second roll-to-roll process, the electrode sheet is unwound from the first electrode roll through over unwinding.

21. The roll map generating method of claim 19, wherein, in the first roll-to-roll process, the electrode sheet is wound into the first electrode roll through under winding, and in the second roll-to-roll process, the electrode sheet is unwound from the first electrode roll through under unwinding.

22. The roll map generating method of claim 19, wherein the first data of the first roll map collected from the first lane of the electrode sheet is matched to the second data of the second roll map collected from the second lane of the electrode sheet, and the first data of the first roll map collected from the second lane of the electrode sheet is matched to the second data of the second roll map collected from the first lane of the electrode sheet.

23. The roll map generating method of claim 16, wherein the first data of the first roll map collected from an upper surface of the electrode sheet is matched to the second data of the second roll map collected from a lower surface of the electrode sheet, and the first data of the first roll map collected from the lower surface of the electrode sheet is matched to the second data of the second roll map collected from the upper surface of the electrode sheet.

24. The roll map generating method of claim 23, wherein, in the first roll-to-roll process, the electrode sheet is wound into the first electrode roll through over winding, and in the second roll-to-roll process, the electrode sheet is unwound from the first electrode roll through under unwinding.

25. The roll map generating method of claim 23, wherein, in the first roll-to-roll process, the electrode sheet is wound into the first electrode roll through under winding, and in the second roll-to-roll process, the electrode sheet is unwound from the first electrode roll through over unwinding.

26. The roll map generating method of claim 23, wherein the first data of the first roll map collected from the first lane of the electrode sheet is matched to the second data of the second roll map collected from the first lane of the electrode sheet, and the first data of the first roll map collected from the second lane of the electrode sheet is matched to the second data of the second roll map collected from the second lane of the electrode sheet.

[FIG. 1]

[FIG. 2]

[FIG. 3]

[FIG. 4]

```
┌─────────────────────────────────────────────────────────┐
│  UNWOUND ELECTRODE SHEET FROM FIRST ELECTRODE ROLL        │ ~P110
│  AND WIND ELECTRODE SHEET INTO SECOND ELECTRODE ROLL      │
└─────────────────────────────────────────────────────────┘
                          │
                          ▼
┌─────────────────────────────────────────────────────────┐
│  COLLECT DATA OF FIRST ELECTRODE ROLL IN UNWINDING        │ ~P120
│  DIRECTION AND DATA OF SECOND ELECTRODE ROLL IN           │
│  WINDING DIRECTION                                        │
└─────────────────────────────────────────────────────────┘
                          │
                          ▼
┌─────────────────────────────────────────────────────────┐
│  TRANSMIT DATA OF FIRST ELECTRODE ROLL IN UNWINDING       │ ~P130
│  DIRECTION AND DATA OF SECOND ELECTRODE IN WINDING        │
│  DIRECTION TO SEVER                                       │
└─────────────────────────────────────────────────────────┘
                          │
                          ▼
┌─────────────────────────────────────────────────────────┐
│  GENERATE SECOND ROLL MAP OF SECOND ELECTRODE BASED       │ ~P140
│  ON FIRST ROLL MAP OF FIRST ELECTRODE ROLL AND DATA       │
│  OF FIRST ELECTRODE ROLL IN UNWINDING DIRECTION           │
└─────────────────────────────────────────────────────────┘
```

[FIG. 5]

```
┌─────────────────────────────────────────────────────────┐
│  COMBINE FIRST INPUT ELECTRODE ROLL WITH SECOND INPUT     │ ~P210
│  ELECTRODE ROLL IR2 TO PROVIDE OUTPUT ELECTRODE ROLL      │
└─────────────────────────────────────────────────────────┘
                          │
                          ▼
┌─────────────────────────────────────────────────────────┐
│  COLLECT COMBINATION DATA OF OUTPUT ELECTRODE ROLL        │ ~P220
└─────────────────────────────────────────────────────────┘
                          │
                          ▼
┌─────────────────────────────────────────────────────────┐
│  TRANSMIT COMBINATION DATA                                │ ~P230
└─────────────────────────────────────────────────────────┘
                          │
                          ▼
┌─────────────────────────────────────────────────────────┐
│  GENERATE OUTPUT ROLL MAP OF OUTPUT ELECTRODE ROLL        │ ~P240
└─────────────────────────────────────────────────────────┘
```

[FIG. 6]

EP 4 629 299 A1

IR2 — WP2 SP2 — 111

CL2 CL1

360 240 120 C2 EC C1 960 840 720

DB1 DB2 DB3 DA1 DA2 DA3

IR1 — SP1 WP1 — 113

OR — IR2 IR1

111

EC+360−Δ EC+240−Δ EC+120−Δ 960 840 720

DB1 DB2 DB3 JT JTL DA1 DA2 DA3

113

27

[FIG. 7]

```
┌─────────────────────────────────────────────────┐
│     SCRAP DEFECTIVE PART OF ELECTRODE SHEET       │──── P310
└─────────────────────────────────────────────────┘
                         │
                         ▼
┌─────────────────────────────────────────────────┐
│              COLLECT SCRAP DATA                   │──── P320
└─────────────────────────────────────────────────┘
                         │
                         ▼
┌─────────────────────────────────────────────────┐
│              TRANSMIT SCRAP DATA                  │──── P330
└─────────────────────────────────────────────────┘
                         │
                         ▼
┌─────────────────────────────────────────────────┐
│  GENERATE SECOND ROLL MAP OF SECOND ELECTRODE     │──── P340
│        ROLL BASED ON SCRAP DATA                   │
└─────────────────────────────────────────────────┘
```

[FIG. 8]

[FIG. 9]

[FIG. 10]

[FIG. 11]

[FIG. 12]

[FIG. 13]

[FIG. 14]

[FIG. 15]

## INTERNATIONAL SEARCH REPORT

| | International application No. |
|---|---|
| | **PCT/KR2024/009436** |

**A. CLASSIFICATION OF SUBJECT MATTER**

**H01M 4/04**(2006.01)i; **B65H 43/04**(2006.01)i; **G06Q 50/04**(2012.01)i; **G06Q 50/10**(2012.01)i; **H01M 10/04**(2006.01)i

According to International Patent Classification (IPC) or to both national classification and IPC

**B. FIELDS SEARCHED**

Minimum documentation searched (classification system followed by classification symbols)

H01M 4/04(2006.01); B05C 11/10(2006.01); B65H 43/00(2006.01); G01N 21/88(2006.01); H01M 10/04(2006.01); H01M 2/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 롤 맵 (roll map), 권출 (unwinder), 권취 (rewinder), 방향 (direction), 데이터 (data), 반전 (reversal), 스크랩 (scrap), 불량 (faulty), 좌표 (coordinates)

**C. DOCUMENTS CONSIDERED TO BE RELEVANT**

| Category* | Citation of document, with indication, where appropriate, of the relevant passages | Relevant to claim No. |
|---|---|---|
| A | KR 10-2023-0066855 A (LG ENERGY SOLUTION, LTD.) 16 May 2023 (2023-05-16)<br>See abstract; paragraphs [0039], [0042], [0058], [0090] and [0093]; and figure 2. | 1-26 |
| A | KR 10-1158853 B1 (LOYPOS CORP.) 22 June 2012 (2012-06-22)<br>See abstract; and claims 1-4. | 1-26 |
| A | JP 2015-133259 A (TOYOTA MOTOR CORP.) 23 July 2015 (2015-07-23)<br>See abstract; paragraphs [0013]-[0017]; claim 1; and figure 1. | 1-26 |
| A | JP 2015-210923 A (TOYOTA INDUSTRIES CORP.) 24 November 2015 (2015-11-24)<br>See abstract; paragraphs [0018]-[0024]; claims 1-4; and figures 2a and 2b. | 1-26 |
| A | KR 10-2006-0085440 A (SAMSUNG SDI CO., LTD.) 27 July 2006 (2006-07-27)<br>See abstract; paragraphs [0027] and [0042]-[0056]; claims 1-6; and figures 3 and 4. | 1-26 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 October 2024** | **14 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
**Information on patent family members**

International application No.

**PCT/KR2024/009436**

| Patent document cited in search report | | | Publication date (day/month/year) | Patent family member(s) | | | Publication date (day/month/year) |
|---|---|---|---|---|---|---|---|
| KR | 10-2023-0066855 | A | 16 May 2023 | CN | 116868359 | A | 10 October 2023 |
| | | | | EP | 4283695 | A1 | 29 November 2023 |
| | | | | JP | 2024-514744 | A | 03 April 2024 |
| | | | | KR | 10-2661396 | B1 | 29 April 2024 |
| | | | | US | 2024-0151524 | A1 | 09 May 2024 |
| | | | | WO | 2023-080747 | A1 | 11 May 2023 |
| KR | 10-1158853 | B1 | 22 June 2012 | None | | | |
| JP | 2015-133259 | A | 23 July 2015 | None | | | |
| JP | 2015-210923 | A | 24 November 2015 | None | | | |
| KR | 10-2006-0085440 | A | 27 July 2006 | KR | 10-0635707 | B1 | 17 October 2006 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230088294

- KR 1020240080253